# EUROPEAN PATENT APPLICATION

(11) **EP 1 347 593 A1**
(43) Date of publication of application: **24.09.2003**
(21) Application number: 01272868.9
(22) Date of filing: 26.12.2001
(51) Int. Cl.: H04L 1/00

(54) **TRANSMITTER, RECEIVER, AND COMMUNICATION METHOD**

(30) Priority: 27.12.2000 JP 2000398398
(71) Applicant: MATSUSHITA ELECTRIC INDUSTRIAL CO., LTD., Kadoma-shi, Osaka 571-8501 (JP)
(72) Inventor: MIYOSHI, Kenichi, Yokohama-shi, Kanagawa 236-0058 (JP); MATSUMOTO, Atsushi, Kanazawa-shi, Ishikawa 920-0021 (JP)
(74) Representative: Grünecker, Kinkeldey, Stockmair & Schwanhäusser Anwaltssozietät
(86) International application number: JP0111448
(87) International publication number: WO02054659

(57) **Abstract**

Separation circuit 250 separates a systematic bit and parity bit from a received packet. Combination circuit 204 symbol-combines the separated systematic bit in this retransmission unit with systematic bits acquired in preceding retransmission units. Then, decoder 214 likelihood-combines the separated parity bit with parity bits acquired in preceding retransmission units and performs error correcting decoding on the symbol-combined systematic bit using the likelihood-combined parity bit as a check bit. This makes it possible to increase the reception level and error correcting performance, reduce the number of times retransmission is carried out until all errors are eliminated and thereby improve throughput.

## Description

### Technical Field

The present invention relates to a communication system, transmission apparatus and reception apparatus that carry out error control in data transmission by issuing automatic repeat requests.

### Background Art

Error control technologies are widely used in radio communications, which correct errors left unresolved by equalization or diversity, etc. to realize high quality transmission. One of these error control technologies is Automatic Repeat Request (hereinafter referred to as "ARQ").

This ARQ connects the transmitting side and receiving side by a bi-directional transmission path, the transmitting side sends the receiving side a packet including codewords generated by applying error detection coding to information bits first, and then the receiving side detects an error. When no error is detected in the received data, the receiving side sends back a reception acknowledgment signal (Positive Acknowledgment, hereinafter may also be referred to as "ACK") indicating that the data has been received correctly to the transmitting side and when some error is detected in the received data, the receiving side sends back a retransmission request signal (Negative Acknowledgment, hereinafter may also be referred to as "NACK") to the transmitting side. Upon receipt of a NACK, the transmitting side resends the same packet. The transmitting side continues to resend the same packet until the transmitting side receives an ACK.

For example, a case where information bits grouped into blocks are sequentially combined into packets and sent will be explained. When the transmitting side sends a first packet and the receiving side receives codewords included in this first packet correctly, the receiving side sends an ACK to the transmitting side. Upon receipt of this ACK, the transmitting side sends a second packet. Then, when the receiving side does not receive this second packet correctly, the receiving side sends a NACK to the transmitting side. Upon receipt of this NACK from the receiving side, the transmitting side sends (resends) the second packet. That is, the transmitting side does not send the next new packet unless the transmitting side receives an ACK from the receiving side and continues to send the same packet which was sent previously. ARQ realizes high quality transmission in this way.

While the above-described ARQ can realize high quality transmission, repeating retransmissions may increase a transmission delay. Especially when a propagation environment is not in good condition, an error rate of data increases, the number of times packets are retransmitted increases and therefore a transmission delay increases drastically. As a technology to solve propagation delays of this ARQ, active researches on a hybrid ARQ are underway. The hybrid ARQ combines ARQ with an error correcting code and is intended to improve an error rate of a received signal using error correction, reduce the retransmission count and thereby improve throughput. Two prevailing systems are proposed as this hybrid ARQ; Chase Combining type and Incremental Redundancy type.

The above Chase Combining type hybrid ARQ (hereinafter referred to as "CC type ARQ") is characterized in that the transmitting side resends the same packet which was sent previously. Upon receipt of the resent packet, the receiving side symbol-combines codewords (systematic bits and parity bits) included in the packets received before this packet and codewords (systematic bit and parity bit) included in the packet resent this time and carries out error correcting decoding on the combined signal. Thus, the CC type ARQ improves the reception level by symbol-combining the codewords included in the previously received packets and codewords included in the packet resent this time, and in this way the error rate of the received signal improves every time retransmission is repeated. Thus, errors in the received signal are eliminated by repeating retransmissions fewer times than ARQ without error correction, making it possible to improve throughput in this way.

On the other hand, the Incremental Redundancy type hybrid ARQ (hereinafter may also be referred to as "IR type ARQ") is characterized in that packets including parity bits, which are different from parity bits included in the previously sent packets are resent. The receiving side stores each parity bit received in a buffer and upon receipt of a retransmission packet, the receiving side carries out error correcting decoding using both the parity bits included in the previously received packets and the parity bit included in the packet received at the time of retransmission. Thus, the IR type increments the parity bit used for error correcting decoding for every retransmission, improving the error correcting performance of the receiving side in this way. Thus, errors in the received signal are eliminated by repeating retransmissions fewer times than ARQ without error correction, making it possible to improve throughput.

However, the problem of the above-described conventional CC type ARQ and IR type ARQ is that it is not possible to obtain expected effects of improving throughput.

### Disclosure of Invention

It is an object of the present invention to provide a transmission apparatus and reception apparatus, and a communication method capable of reducing the number of times retransmission is carried out until all errors are eliminated and improving throughput by improving the reception level and error correcting performance.

The present inventor et al. noticed that according to an IR type ARQ, the result of a comparison between a packet received with a previous retransmission unit and a packet received with a retransmission unit this time shows that the two packets are only different in parity bits, while the same information bit (systematic bit) is resent as is. The present inventor et al. has come up with the present invention by discovering that combining the systematic bit included in the packet sent with the previous retransmission unit and the systematic bit included in the packet sent with the retransmission unit this time on the receiving side will improve the reception level and improve the error rate of received data.

That is, the above object is attained in an IR type ARQ by the transmitting side sending a packet composed of a systematic bit and parity bit placed in different symbols and by the receiving side symbol-combining the systematic bit included in the packet sent with the previous retransmission units and the systematic bit included in the packet resent this time and applying error correcting decoding to this symbol-combined systematic bit using the parity bits received until the retransmission unit this time.

### Brief Description of Drawings

FIG.1 illustrates an outlined configuration of a data transmission apparatus according to Embodiment 1 of the present invention;
FIG.2 is a block diagram showing an internal configuration of a transmission apparatus according to Embodiment 1 of the present invention;
FIG.3 is a block diagram showing an internal configuration of a reception apparatus according to Embodiment 1 of the present invention;
FIG.4 is a flow chart showing a flow of ARQ processing according to this embodiment;
FIG.5 is a schematic view showing a processing flow of reception apparatus 200 according to Embodiment 1 of the present invention;
FIG.6 is a block diagram showing an internal configuration of a transmission apparatus according to Embodiment 2 of the present invention;
FIG.7 is a block diagram showing an internal configuration of a reception apparatus according to Embodiment 2 of the present invention;
FIG.8 is a schematic view showing an ARQ processing flow according to Embodiment 2 of the present invention;
FIG.9 is a schematic view showing a processing flow of the reception apparatus according to Embodiment 2 of the present invention;
FIG.10 illustrates an outlined configuration of a data transmission apparatus according to Embodiment 3 of the present invention;
FIG.11 is a block diagram showing an internal configuration of a transmission apparatus according to Embodiment 3 of the present invention;
FIG.12 is a block diagram showing a configuration of a shared reception apparatus according to Embodiment 3 of the present invention;
FIG.13 is a schematic view showing a processing flow of a reception apparatus according to Embodiment 3 of the present invention;
FIG.14 is a block diagram showing an internal configuration of a CC reception apparatus according to Embodiment 3 of the present invention;
FIG.15 is a block diagram showing an internal configuration of an IR reception apparatus according to Embodiment 3 of the present invention;
FIG.16 illustrates an outlined configuration of a data transmission apparatus according to Embodiment 4 of the present invention;
FIG.17 is a block diagram showing an internal configuration of a transmission apparatus according to Embodiment 4 of the present invention; and
FIG.18 is a schematic view showing a processing flow of a reception apparatus according to Embodiment 4 of the present invention.

### Best Mode for Carrying out the Invention

The present invention applies spreading processing on a symbol-converted systematic bit and parity bit using mutually different spreading codes and thereby assigns the systematic bit and parity bit to different symbols.

Furthermore, the present invention provides bit segments according to a modulation system for a packet, assigns the systematic bit and parity bit to mutually different bit segments and thereby assigns the systematic bit and parity bit to different symbols.

With reference now to the attached drawings, embodiments of the present invention will be explained below.

### (Embodiment 1)

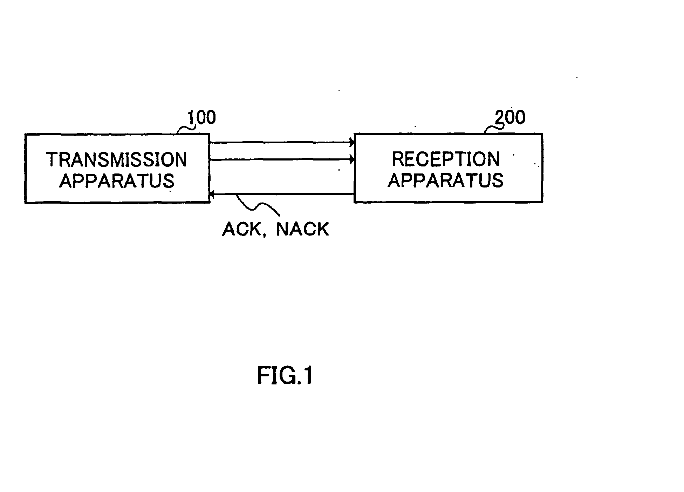

FIG.1 illustrates an outlined configuration of a data transmission apparatus according to Embodiment 1 of the present invention. As shown in this figure, transmission apparatus 100 is connected with reception apparatus 200 by a bi-directional transmission path. Transmission apparatus 100 applies error detecting coding and error correcting coding on information bits grouped into L blocks of 1st to Lth blocks, and thereby generates systematic bits and parity bits. Since this error correcting coding is carried out using a self-organizing code, the same information bits are output as systematic bits. In the present Specification, an information bit output as is during coding is referred to as a "systematic bit". Transmission apparatus 100 generates a packet by adding a protocol header to the systematic bit and parity bit and sends the packet generated to reception apparatus 200. A packet is an example of a data transmission unit and there are other data transmission units such as frame and super frame.

Reception apparatus 200 receives the packet sent from transmission apparatus 100, separates and extracts the systematic bit and parity bit from this received packet. Then, reception apparatus 200 carries out error correcting decoding on the systematic bit using the parity bit as a check bit and applies error detection processing to this decoding result. When the result of the error detection shows that no error is detected in the decoding result, reception apparatus 200 sends a reception acknowledgment signal (Positive Acknowledgment: hereinafter referred to as "ACK") to transmission apparatus 100 and when some error is detected in the decoding result, reception apparatus 200 sends a retransmission request signal (Negative Acknowledgment: hereinafter referred to as "NACK") to transmission apparatus 100.

Upon receipt of a NACK, transmission apparatus 100 generates a retransmission packet by multiplexing a symbol assigned the same systematic bit as the systematic bit in the previous retransmission unit, a symbol assigned a parity bit different from the parity bit in the previous retransmission unit and a protocol header and sends the retransmission packet generated to reception apparatus 200. Upon receipt of the retransmission packet, reception apparatus 200 separates the symbol assigned the systematic bit and the symbol assigned the parity bit from the received packet and symbol-combines (power-combines) the symbol assigned the separated systematic bit and the symbol assigned the systematic bit received in the previous retransmission unit. Then, this symbol-combined systematic bit is decoded using the parity bit received in the previous retransmission unit and the parity bit received in the retransmission unit this time. This decoding result is subjected to error detection and an ACK or NACK is sent to transmission section 100 according to the error detection result. Upon receipt of a NACK, transmission apparatus 100 generates and sends a new retransmission packet. Transmission apparatus 100 repeats retransmissions until an ACK is received and upon receipt of an ACK, transmission apparatus 100 starts to send information bits of the next block.

By the way, in the present Specification, a series of processing after transmission of information bits of an Mth block (1≦M≦L) until the information bits of this Mth block are received correctly (that is, until transmission apparatus 100 receives an ACK) is collectively called "ARQ processing".

In the present Specification, the processing unit is called a "retransmission unit" which covers from the transmission of a packet from transmission apparatus 100 up to the point where transmission apparatus 100 receives an ACK or NACK from reception apparatus 200. Furthermore, when ARQ processing is performed for the information bits of a predetermined block, the processing unit after the transmitting side sends a kth packet until the transmitting side receives an ACK or NACK is called a "kth retransmission unit".

Then, above transmission apparatus 100 and reception apparatus 200 will be explained in detail.

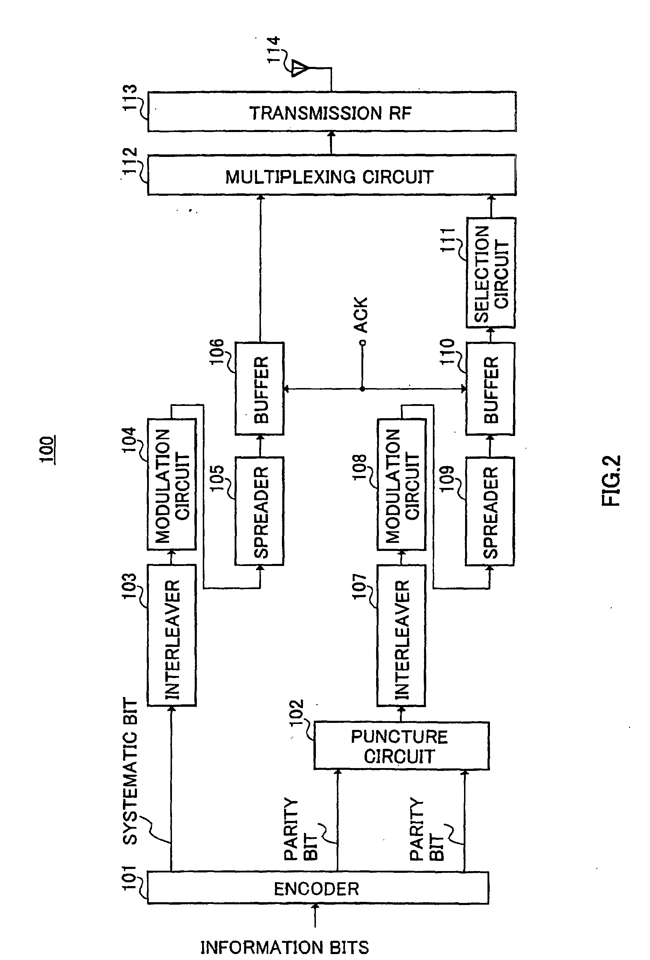

First, transmission apparatus 100 will be explained. FIG.2 is a block diagram showing an internal configuration of transmission apparatus 100. In this FIG.2, encoder 101 carries out error detecting coding and error correcting coding sequentially on the information bits grouped into L blocks from 1st to Lth blocks. An organizing code is used for this error correcting coding, and a systematic bit, which is the information bit itself and coded series which is the convolutional-coded information bit (parity bit) are generated. When, for example, a turbo encoder with a code rate of 1/3 is used as encoder 101, one systematic bit (S) is output to interleaver 103 for the input of one information bit and two parity bits are output to puncture circuit 102. It is desirable that encoder 101 according to this embodiment should use a turbo code, which is an organizing code and at the same time excellent in error correcting performance.

The data sequence of the systematic bits output from encoder 101 is rearranged by interleaver 103 according to a predetermined rule and output to modulation circuit 104. The interleaved systematic bits are placed on symbols on an orthogonal coordinates by modulation circuit 104 using QPSK and 16QAM, etc., multiplied by spreading code A by spreader 105 and written to buffer 106. That is, modulation circuit 104 and spreader 105 assign systematic bits to spreading code A. In the present Specification, a symbol where a systematic bit is placed may be referred to as a "symbol-converted systematic bit". On the other hand, the symbol where a parity bit is placed may be referred to as a "symbol-converted parity bit".

Puncture circuit 102 performs puncturing processing on a parity bit input. That is, puncture circuit 102 applies puncturing processing to the parity bit input, generates parity bits P1 to Pn and outputs parity bits P1 to Pn generated to interleaver 107. Interleaver 107 rearranges the data sequence of parity bits P1 to Pn according to a predetermined rule.

For example, the puncturing processing when a turbo encoder with a code rate of 1/3 is used as encoder 101 will be explained. Encoder 101 encodes information bits input and outputs 2 series of parity bits. Suppose the parity bits output in the first series are Pa1, Pa2, Pa3, ... in that order and the parity bits output in the second series are Pb1, Pb2, Pb3, ... in that order. That is, parity bits from both series are input to puncture circuit 102 in order of {Pa1, Pb1, Pa2, Pb2, Pa3, Pb3,··· ···}. Puncture circuit 102 performs puncturing by erasing some bits of the parity bit string input in this way at certain intervals to generate a parity bit string of P1 to Pn. For example, erasing even-numbered bits generates {Pa1, Pa2, Pa3, ...} as parity bit string P1 and erasing odd-numbered bits generates {Pb1, Pb2, Pb3, ...} as parity bit string P2. The cycle of erasing bits by puncturing is modifiable as appropriate according to communication efficiency required by the code rate or the system.

Parity bits P1 to Pn output from interleaver 107 are placed by modulation circuit 108 on symbols on an orthogonal coordinates using QPSK or 16QAM, etc., multiplied by spreading code B by spreader 109 and written to buffer 110. That is, modulation circuit 108 and spreader 109 assign symbol-converted parity bits P1 to Pn to spreading code B. In this way, parity bits P1 to Pn are assigned to a spreading code different from that of systematic bits.

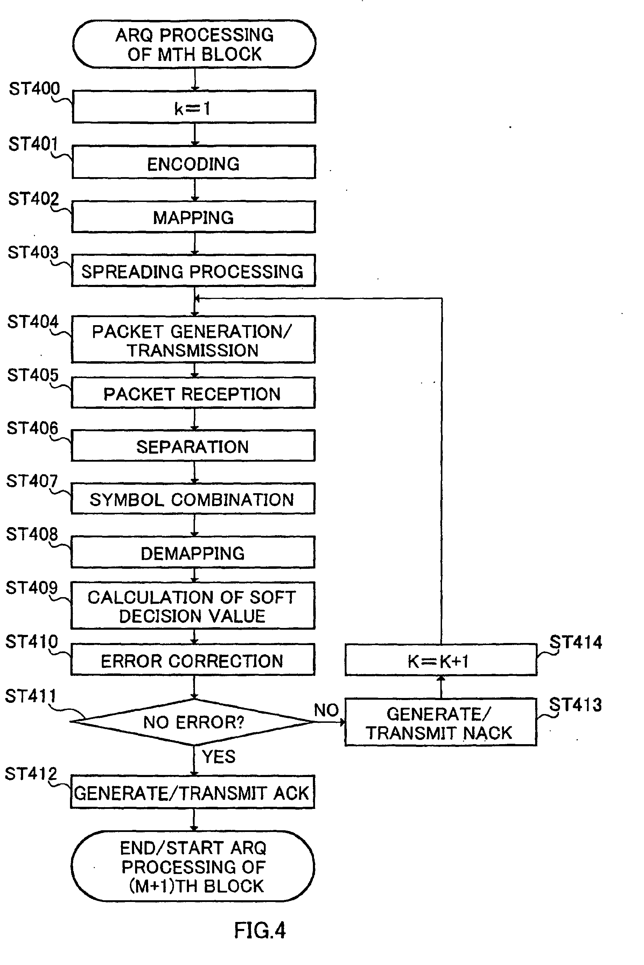

Selection circuit 111 reads parity bits corresponding to the transmission count from parity bits P1 to Pn stored in buffer 110 and outputs the parity bits to multiplexing circuit 112. That is, selection circuit 111 decides what number of transmission (what number of retransmission unit) is carried out this time with respect to the information bits of a predetermined block based on information notified from a control station (not shown) and selects a parity bit corresponding to the transmission count. For example, in the case of the kth transmission (kth retransmission unit) with respect to the information bits of a predetermined block, parity bit Pk is read from buffer 110 and output to multiplexing circuit 112. This k corresponds to the iteration count shown in FIG.4 which will be described later.

Multiplexing circuit 112 reads a symbol in which systematic bits are placed from buffer 106, multiplexes the read symbol, symbol-converted parity bits output from selection circuit 111, and protocol header to generate a transmission packet and outputs the transmission packet generated to transmission RF 113. Transmission RF 113 applies predetermined transmission processing such as frequency conversion and amplification to the transmission packet output from multiplexing circuit 112 and sends the transmission packet to reception apparatus 200 via antenna 114.

Upon receipt of an ACK sent from reception apparatus 200, buffer 106 and buffer 110 discard the systematic bits and parity bits P1 to Pn stored at the time of acquisition of this ACK. Of the information bits grouped into blocks, the systematic bits or parity bits obtained by coding the information bits of the next block are written to buffer 106 and buffer 110. This starts ARQ processing corresponding to the information bits of the next block.

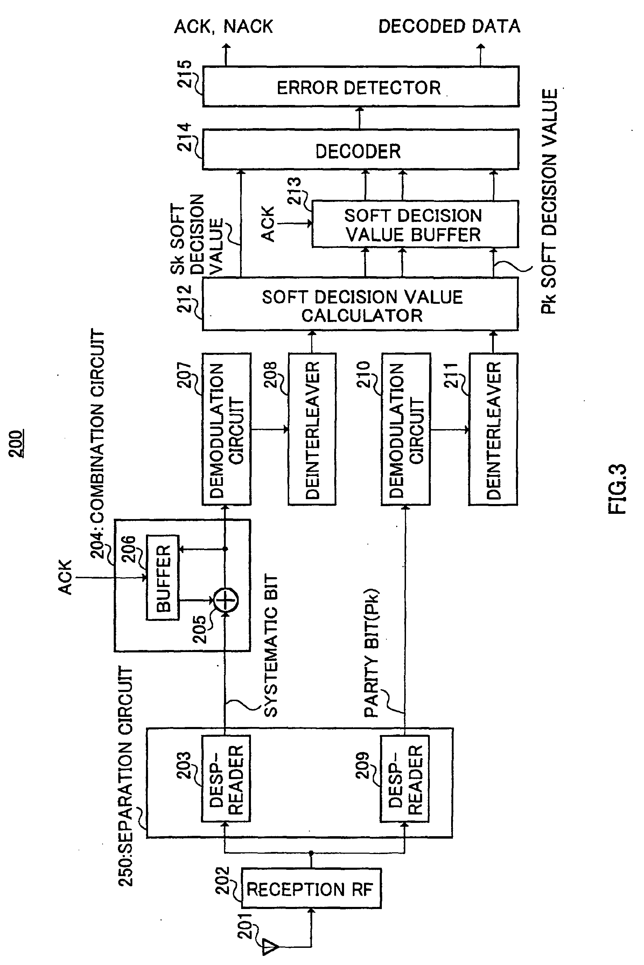

Then, reception apparatus 200 will be explained. FIG.3 is a block diagram showing an internal configuration of reception apparatus 200. In this FIG.3, reception RF 202 applies predetermined reception processing such as frequency conversion to a packet received from antenna 201 and outputs the packet subjected to the reception processing to separation circuit 250. Separation circuit 250 separates the symbol in which systematic bits are placed and the symbol in which parity bits are placed from the received packet. The symbol provided with systematic bits after the separation is output to combination circuit 204 and the symbol provided with parity bits after the separation is output to demodulation circuit 210.

Separation circuit 250 is provided with despreader 203 and despreader 209. This despreader 203 applies despreading processing to the received packet output from reception RF 202 using spreading code A and RAKE-combines the despread signals. In this way, the systematic bits assigned to spreading code A are extracted as symbols from the received packet. On the other hand, despreader 209 applies despreading processing to the received packet output from reception RF 202 using spreading code B and RAKE-combines the despread signals. In this way, the parity bits assigned to spreading code B are extracted as symbols from the received packet. Thus, separation circuit 250 separates symbols provided with systematic bits from symbols provided with parity bits by applying despreading processing to the received packet using mutually different spreading codes.

Next, the processing to be carried out on systematic bits and parity bits separated into different symbols as shown above will be explained. First, processing to be carried out on systematic bits will be explained and then processing to be carried out on parity bits will be explained.

A systematic bit output from despreader 203 is input to combination circuit 204. Combination circuit 204 is provided with adder 205 and buffer 206. Every time adder 205 receives a packet, adder 205 symbol-combines the symbol read from buffer 206 and the symbol provided with the systematic bit received in the retransmission unit this time. Adder 205 overwrites buffer 206 with the combined symbol and outputs the combined symbol to demodulation circuit 207 as well. Buffer 206 is overwritten with a combined symbol calculated by adder 205 every time a retransmission is iterated. Therefore, buffer 206 stores a symbol combining all systematic bits received until the retransmission unit this time. Upon receipt of an ACK, buffer 206 discards the stored combined symbol.

The symbol combination processing by above combination circuit 204 will be explained taking a case where information bits (suppose the information bits of the Mth block) of a predetermined block is received correctly at the third reception (third retransmission unit) as an example. First, when the information bits of the (M-1)th block are received correctly, transmission apparatus 100 sends packet #1 composed of systematic bits and parity bits made up of coded information bits of the Mth block. Furthermore, the symbols stored in buffer 206 are discarded. In the present Specification, the packet transmitted/received at a kth time is referred to as "packet #k".

Reception apparatus 200 receives this packet #1 and separates symbols provided with systematic bits from received packet #1 and outputs to adder 205. Since buffer 206 stores no symbol to be read, adder 205 outputs the systematic bits to buffer 206 and demodulation circuit 207 which will be described later as they are. The reception result of this first retransmission unit includes errors, and therefore a NACK is sent to transmission apparatus 100 and transmission apparatus 100 sends the next (2nd retransmission unit) packet (packet #2).

Upon receipt of this packet #2, reception apparatus 200 separates symbols provided with systematic bits from packet #2 and outputs to adder 205. Adder 205 reads symbols provided with the systematic bits in the first retransmission unit from buffer 206, symbol-combines the read symbols and the symbols provided with the systematic bits in the second retransmission unit and overwrites buffer 206 with this symbol combination result (combined symbol). Since the reception result of the second retransmission unit also includes errors, a NACK is sent to transmission apparatus 100 and transmission apparatus 100 sends the next (3rd retransmission unit) packet (packet #3).

Upon receipt of this packet #3, reception apparatus 200 separates symbols provided with systematic bits from packet #3 and outputs to adder 205. Adder 205 reads a symbol combining the systematic bits received in the first retransmission unit and the systematic bits received in the second retransmission unit from buffer 206 and symbol-combines the read symbols and the symbols provided with the systematic bits received in the third retransmission unit. Then, adder 205 overwrites buffer 206 with this symbol combination result (combined symbol). The combined symbol obtained this time takes a value obtained by symbol-combining the systematic bits received in the first retransmission unit to third retransmission unit. Thus, upon reception of the kth retransmission unit (before symbol combination), buffer 206 stores a symbol combining all systematic bits received from the first retransmission unit to the (k-1)th retransmission unit and when the symbol combination at adder 205 is completed, the symbol combination result (symbol combining all systematic bits received in the first retransmission unit to the (k-1)th retransmission unit) is overwritten.

Since the reception result in the third retransmission unit includes no errors, an ACK is sent to transmission apparatus 100 and buffer 206. Upon receipt of the ACK, buffer 206 discards the stored symbols. This completes ARQ processing on the information bits of the Mth block.

Hereafter, the present Specification will sometimes refer to a combined symbol obtained by combining symbols provided with systematic bits received in the first retransmission unit to the kth retransmission unit as "combined symbol #k". As described above, combination circuit 204 generates combined symbol #k by symbol-combining combined symbol #(k-1) read from buffer 206 and symbol provided with systematic bits included in the packet (packet #k) received in the kth retransmission unit.

The combined symbol resulting from symbol combination at combination circuit 204 is output to demodulation circuit 207. Demodulation circuit 207 demaps symbols provided with systematic bits. Deinterleaver 208 restores the original data sequence of systematic bits demapped at demodulation circuit 207 and outputs the resorted data to soft decision value calculator 212.

Then, the processing to be carried out on parity bits will be explained. Here, of the ARQ processing on the information bits of the Mth block, the processing to be carried out on parity bits included in the packet (packet #k) received in the kth retransmission unit will be explained as an example.

As described above, despreader 209 carries out despreading processing on a received packet output from reception RF 202 using spreading code B, RAKE-combines the despread signals and thereby extracts symbols including parity bit Pk from the received packet and outputs to demodulation circuit 210.

Demodulation circuit 210 applies demapping processing to parity bit Pk output from despreader 209. Deinterleaver 211 restores the original data sequence of parity bit Pk output from demodulation circuit 210 and outputs to soft decision value calculator 212.

Then, the blocks after soft decision value calculator 212 will be explained. This will be followed by an explanation of processing performed on the packet (packet #k) received in the kth retransmission unit in ARQ processing on the information bits of the Mth block as an example.

Soft decision value calculator 212 calculates a soft decision value calculates a soft decision value of combined symbol #k (Sk soft decision value) output from deinterleaver 208 and outputs the calculated Sk soft decision value to decoder 214. Furthermore, soft decision value calculator 212 calculates a soft decision value (Pk soft decision value) of parity bit Pk output from deinterleaver 211 and outputs the calculated Pk soft decision value to soft decision value buffer 213. The present Specification refers to the soft decision value of combined symbol #k as "Sk soft decision value" and the soft decision value of parity bit Pk as "Pk soft decision value". Soft decision value buffer 213 stores soft decision values output from soft decision value calculator 212 and discards the stored soft decision values upon receipt of an ACK. In the kth retransmission unit, this soft decision value buffer 213 stores the P1 soft decision value to Pk soft decision value.

Decoder 214 reads the P1 soft decision value to Pk soft decision value from soft decision value buffer 213 and performs error correcting decoding on the Sk soft decision value using the read P1 soft decision value, P2 soft decision value, ···, Pk soft decision value as check bits. That is, decoder 214 performs error correcting decoding on the Sk soft decision value by applying likelihood combination to the P1 soft decision value, P2 soft decision value, ···, Pk soft decision value. In the case where encoder 101 uses turbo codes, turbo decoding is used for this error correcting decoding. The decoding result is output to error detector 215.

Thus, decoder 214 carries out error correcting decoding on the Sk soft decision value using the P1 soft decision value, P2 soft decision value, ···, Pk soft decision value read from soft decision value buffer 213 as check bits. Therefore, as the number of times packets are received (that is, packet transmission count at transmission apparatus 100) increases, the redundancy of the parity bits used as the check bits in the decoding processing increases and the error correcting performance in decoding processing increases. Furthermore, the level of combined symbol #k improves as the packet reception count increases, and therefore a distance between signals increases and the reception quality improves accordingly.

Error detector 215 detects errors of the decoding result output from decoder 214, and generates a NACK if there is any error and generates an ACK if there is no error.

Then, ARQ processing carried out by transmission apparatus 100 and reception apparatus 200 in the above-described configuration will be explained using FIG.4. FIG.4 is a flow chart showing a flow of ARQ processing according to this embodiment. Here, ARQ processing until the information bits of the Mth block (1≦M≦L) of the information bits grouped into L blocks from a 1st block to Lth block are received correctly by reception apparatus 200 will be explained.

First, in step (hereinafter abbreviated as "ST") 400, iteration count k in this flow chart is set to k=1. Then, in ST401, encoder 101 carries out error detecting coding and error correcting coding on the information bits of the Mth block and generates a systematic bit and parity bit. The parity bit is subjected to puncturing processing by puncture circuit 102 and parity bits P1 to Pn are generated. The processing with iteration count k corresponds to the processing in the kth retransmission unit.

Then, in ST402, modulation circuit 104 and modulation circuit 108 place the systematic bit and parity bit on a symbol on orthogonal coordinates. Then, in ST403, spreader 105 spreads the systematic bit using spreading code A. On the other hand, spreader 109 spreads parity bits P1 to Pn using spreading code B which is different from spreading code A. The spread systematic bit is stored in buffer 106 and spread parity bits P1 to Pn are stored in buffer 110. Thus , in ST402 and ST403, the symbol provided with the systematic bit is assigned spreading code A which is different from spreading code B assigned to symbols provided with parity bits.

Then, in ST404, multiplexing circuit 112 code-multiplexes the symbol provided with the systematic bit output from buffer 106, the symbol provided with parity bit P1 read from buffer 110 by selection circuit 111 and a protocol header to generate packet #1 and packet #1 generated is sent to reception apparatus 200.

This packet #1 is received by reception apparatus 200 and received packet #1 is subjected to predetermined reception processing, etc. and input to separation circuit 250 (despreader 203 and despreader 209) (ST405). Then, in ST406, separation circuit 250 applies despreading processing to received packet #1 and separates the symbol provided with the systematic bit and the symbol provided with parity bit P1 from the code-multiplexed signal. That is, despreader 203 multiplies the received packet by spreading code A and extracts the symbol provided with the systematic bit, while despreader 209 multiplies the received packet by spreading code B which is different from spreading code A and extracts the symbol provided with parity bit P1.

The symbol provided with the systematic bit separated from the received packet is written to buffer 206 in ST407. Furthermore, the symbol provided with the systematic bit is output to demodulation circuit 207. Then, in ST408, demodulation circuit 207 applies predetermined demodulation processing to the systematic bit, while demodulation circuit 210 applies predetermined demodulation processing to parity bit P1.

Then, in ST409, soft decision calculator 212 calculates a soft decision value of the systematic bit (S1 soft decision value) and a soft decision value of parity bit P1 (P1 soft decision value) respectively. This P1 soft decision value is stored in buffer 213 until ARQ processing on the information bits of the Mth block is completed. Then, in ST410, decoder 214 carries out error correcting decoding on the S1 soft decision value using the P1 soft decision value as a check bit.

Then, in ST411, error detector 215 detects errors in the decoding result in ST407, and when there is no error, the process moves on to ST412 where an ACK is generated. When there is some error, the process moves on to ST413 where a NACK is generated. In ST412, the generatedACK is sent to transmission apparatus 100. When transmission apparatus 100 receives the ACK, the ARQ processing on the information bits of the Mth block is completed and ARQ processing on the information bits of the next block (the (M+1)th block) starts.

On the other hand, in ST413, the generated NACK is sent to transmission apparatus 100 and the process moves on to ST414. In ST414, 1 is added to the iteration count and k=2 is set and the process moves on to ST404 where the processing in the second retransmission unit is started.

In ST404, multiplexing circuit 112 generates packet #2 by multiplexing a symbol provided with a systematic bit, a symbol provided with parity bit P2 read by selection circuit 111 from buffer 110 and a protocol header, and sends the packet #2 generated to reception apparatus 200.

This packet #2 is received by reception apparatus 200 and the received packet #2 is subjected to predetermined reception processing, etc. and input to separation circuit 250 (despreader 203 and despreader 209) (ST405). Then, in ST406, separation circuit 250 applies despreading processing to received packet #2 and separates the code-multiplexed signal into the symbol provided with the systematic bit and the symbol provided with parity bit P2.

In ST407, the symbol provided with the separated systematic bit is symbol-combined with the symbol provided with the systematic bit received in the previous retransmission unit (1st retransmission unit) read from buffer 206. The combined symbol overwrites buffer 206 and is also output demodulation circuit 207. Then, in ST408, demodulation circuit 207 performs demapping processing on the symbol provided with the systematic bit and demodulation circuit 210 performs demapping processing on parity bit P2.

Then, in ST409, soft decision calculator 212 calculates a soft decision value (S2 soft decision value) of the combined systematic bit and a soft decision value of parity bit P2 (P2 soft decision value). This P2 soft decision value is stored in buffer 213 until ARQ processing of the information bits of the Mth block is completed.

Then, in ST410, decoder 214 carries out error correcting decoding on the S2 soft decision value using the P1 soft decision value and P2 soft decision value as check bits. In the second retransmission unit, error correcting decoding is carried out using the parity bit which has higher redundancy than the first retransmission unit as a check bit. More specifically, the redundancy of the check bit is higher by an amount corresponding to the P2 soft decision value. It is known that the error correcting performance during error correcting decoding improves as the redundancy of the check bit increases. When turbo decoding is used as the decoding system of this embodiment, the redundancy of the check bit increases and thereby the error correcting performance improves, which makes it possible to eliminate errors included in the decoded data with fewer transmissions and thereby improve throughput.

Furthermore, in the second retransmission unit, error correcting decoding is performed on the systematic bit after symbol combination. The systematic bit after symbol combination has a higher signal level than a systematic bit without symbol combination, which increases the distance between signals and thereby improves reception quality. This eliminates errors included in the decoded data with fewer transmissions.

Then, in ST411, error detection on the decoding result in ST407 is carried out and if there is no error, the process moves on to ST412 where an ACK is generated, and if there is some error, the process moves on to ST413 where a NACK is generated. In ST414, iteration number k is set to k=3 and the process moves on to ST404. In the case of k≧3, the same processing as in the case of k=2 is repeated, and therefore assuming k=j (j≧3), processing carried out in the jth retransmission unit in ST404 to ST414 will be explained.

In the case of k=j, in ST404, multiplexing circuit 112 generates packet #j by multiplexing a symbol provided with a systematic bit, a symbol provided with parity bit Pj read by selection circuit 111 from buffer 110 and a protocol header, and sends the packet #j generated to reception apparatus 200.

This packet #j is received by reception apparatus 200 and the received packet #j is subjected to predetermined reception processing, etc. and input to separation circuit 250 (despreader 203 and despreader 209) (ST405). Then, in ST406, separation circuit 250 applies despreading processing to received packet #j and separates the code-multiplexed signal into the symbol provided with the systematic bit and the symbol provided with parity bit Pj.

For the jth retransmission unit, buffer 206 stores a symbol (combined symbol #(j-1)) resulting from combining symbols provided with systematic bits received in the 1st retransmission unit to the (j-1)th retransmission unit. The symbol provided with the systematic bit received in the jth retransmission unit is symbol-combined with the combined symbol #(j-1) read from above buffer 206 in ST407. In this way, a symbol (combined symbol #j) resulting from combining the systematic bits received in the 1st retransmission unit to the jth retransmission unit is generated. The combined symbol (combined symbol #j) overwrites buffer 206 and is output to demodulation circuit 207 as well. Then, in ST408, demodulation circuit 207 performs demapping processing on symbols provided with systematic bits and demodulation circuit 210 performs demapping processing on symbols provided with parity bit Pj.

Then, is ST409, soft decision value calculator 212 calculates a soft decision value of the symbol-combined systematic bit (Sj soft decision value) and a soft decision value of parity bit Pj (Pj soft decision value). This Pj soft decision value is stored in buffer 213 until the ARQ processing on the information bits of the Mth block is completed.

Then, is ST410, decoder 214 performs error correcting decoding on the Sj soft decision value using the P1 soft decision value, P2 soft decision value, ··· ···, Pj soft decision value as check bits. In the jth retransmission unit, error correcting decoding is performed using a parity bit with a higher redundancy level than in the (j-1)th retransmission unit as a check bit. To be specific, the redundancy level of the check bit is higher by an amount corresponding to the Pj soft decision value. Therefore, when data is received in the jth retransmission unit, the error correcting performance is improved compared to the reception in the (j-1)th retransmission unit, it is possible to eliminate errors included in decoded data with fewer transmissions and thereby improve throughput.

Furthermore, in the jth retransmission unit, error correcting decoding is performed on a symbol-combined systematic bit. During reception in the jth retransmission unit, the combined symbol (combined symbol #j) input to decoder 214 has a higher level than the combined symbol (combined symbol #(j-1)) input to decoder 214 during reception in the (j-1) retransmission unit, and therefore the distance between signals increases and the error rate improves. This makes it possible to eliminate errors contained in the decoded data with fewer transmissions and thereby improve throughput.

Thus, the ARQ processing according to this embodiment applies despreading processing to a packet in which a systematic bit and parity bit assigned to mutually different spreading codes are code-multiplexed and thereby extracts the symbol provided with the systematic bit and the symbol provided with parity bit P1 separately from the code-multiplexed packet. Thus, separating the symbol provided with the systematic bit from the symbol provided with the parity bit makes it possible not only to symbol-combine the symbol provided with the separated systematic bit with the systematic bits received until the previous retransmission unit but also to increase the level of redundancy of the check bit every time retransmission is repeated. This reduces the number of times retransmission is carried out until all errors are eliminated and can thereby improve throughput.

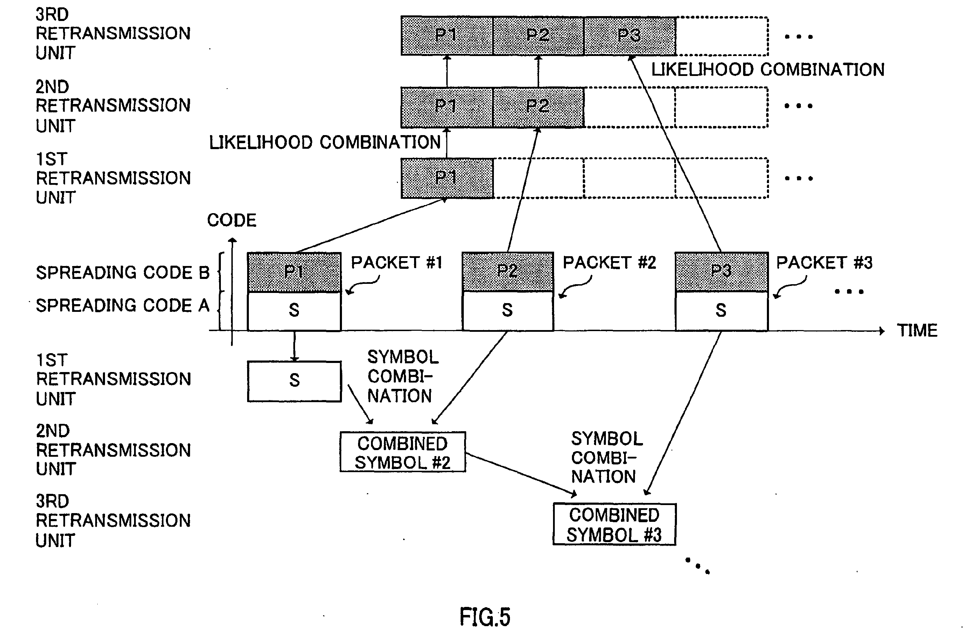

Here, a signal flow at reception apparatus 200 according to this embodiment will be explained. FIG.5 is a schematic view showing the processing flow at reception apparatus 200 according to Embodiment 1 of the present invention. Here, for ease of explanation, FIG.5 shows the flow up to the 3rd retransmission unit.

As shown in this figure, packet #1 received in the 1st retransmission unit is composed of systematic bit S and parity bit P1, packet #2 received in the 2nd retransmission unit is composed of systematic bit S and parity bit P2 and packet #3 received in the 3rd retransmission unit is composed of systematic bit S and parity bit P3. Since mutually different spreading codes are assigned to systematic bit S and parity bits P1 to P3, reception apparatus 200 can extract the symbol provided with systematic bit s and symbol provided with each parity bit separately.

In the 1st retransmission unit, decoder 214 performs error correcting decoding on systematic bit S extracted from packet #1 using parity bit P1 as a check bit. In this case, decoder 214 performs error correcting decoding by inserting a dummy bit at a position corresponding to the bit subjected to puncturing and erased at transmission apparatus 100.

In the 2nd retransmission unit, systematic bit S is extracted from packet #2 and symbol-combined with the systematic bit extracted from packet #1 to generate combined symbol #2. Using both parity bit P2 extracted from packet #2 and parity bit P1 extracted from packet #1 in the 1st retransmission unit as check bits, decoder 214 carries out error correcting decoding on the symbol-combined systematic bit (combined symbol #2). That is, decoder 214 applies likelihood combination to parity bit P1 extracted in the 1st retransmission unit and parity bit P2 extracted in the 2nd retransmission unit and performs error correcting decoding on combined symbol #2 using the parity bits subjected to likelihood combination. Thus, carrying out symbol combination can make the signal level higher than systematic bits without symbol combination and can thereby improve the reception quality in the 2nd retransmission unit compared to that in the 1st retransmission unit.

Similarly in the 3rd retransmission unit, error correcting decoding is performed also using parity bit P3 included in packet #3 in addition to already received parity bit P1 and parity-bit P2, which improves the error correcting performance of decoder 214. Furthermore, the symbol provided with the systematic bit extracted from retransmission packet #3 is symbol-combined with combined symbol #2 to generate combined symbol #3. Combined symbol #3 has a higher signal level than that of combined symbol #2, and therefore it is possible to improve the reception quality in the 3rd retransmission unit compared to the reception quality in the 2nd retransmission unit.

According to this embodiment described so far, transmission apparatus 100 assigns systematic bits and parity bits to different spreading codes and thereby constructs a packet provided with systematic bits and parity bits in mutually different symbols. Reception apparatus 200 that has received this packet can separate symbols provided with systematic bits from symbols provided with parity bits. Thus, it is possible to increase the ratio of parity bits to check bits used for error correcting decoding every time retransmission is repeated and improve the reception quality by symbol-combining systematic bits. This makes it possible to reduce the number of times retransmission is carried out until all errors are eliminated and thereby improve throughput.

Furthermore, according to this embodiment, systematic bits in the symbols acquired in the preceding retransmission units (before being converted to bit information) are read from buffer 206 before converting systematic bits placed in symbols are converted into bit information and those systematic bits are symbol-combined. Since one symbol can carry information on a plurality (N) of bits, storing systematic bits as symbol information before converting them to bit information in buffer 206 makes it possible to reduce the buffer size to 1/N times the size when systematic bits converted to bit information are stored. That is, by storing systematic bits as symbols in buffer 206, according to this embodiment, the buffer size can be reduced compared to the case where systematic bits are converted to bit information and then stored in the buffer.

Furthermore, according to this embodiment, systematic bits are symbol-combined before soft decision values of the systematic bits are calculated, and thereby deterioration of the reception performance based on calculation errors that occur during soft decision processing by soft decision value calculator 212 can be suppressed. That is, when soft decision value calculator 212 carries out soft decision value calculation processing with simplified Max processing, etc. to reduce the amount of calculation and more errors occur, calculating soft decision values of systematic bits for respective retransmission units and then combining the systematic bits will result in calculation errors in the soft decision processing for each systematic bit. Then, combining systematic bits containing errors will increase errors and deteriorate the reception performance. According to this embodiment, the calculation of soft decision values after symbol combination limits the occurrence of calculation errors to only one time and can thereby improve the reception performance.

### (Embodiment 2)

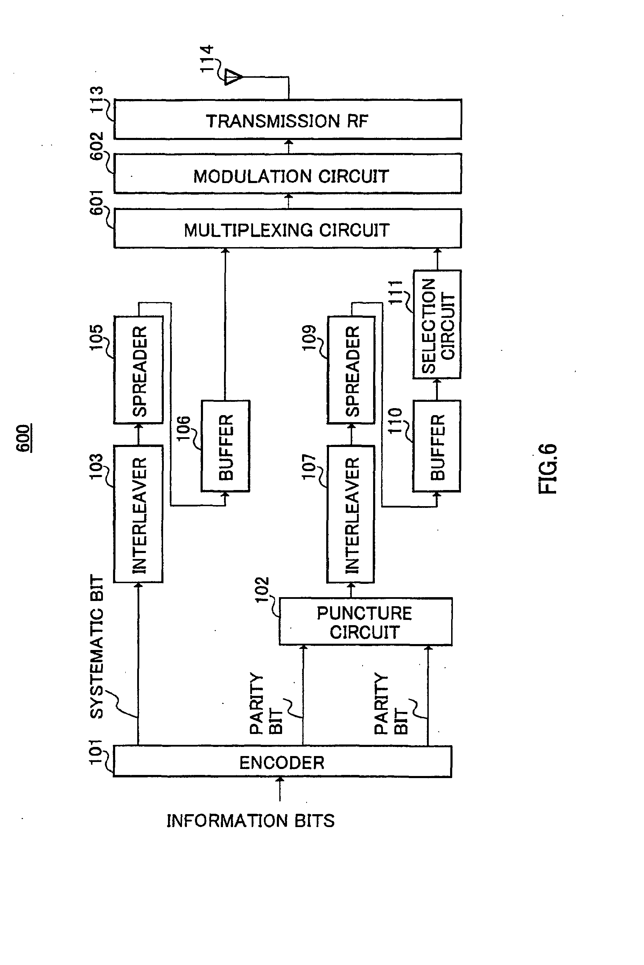

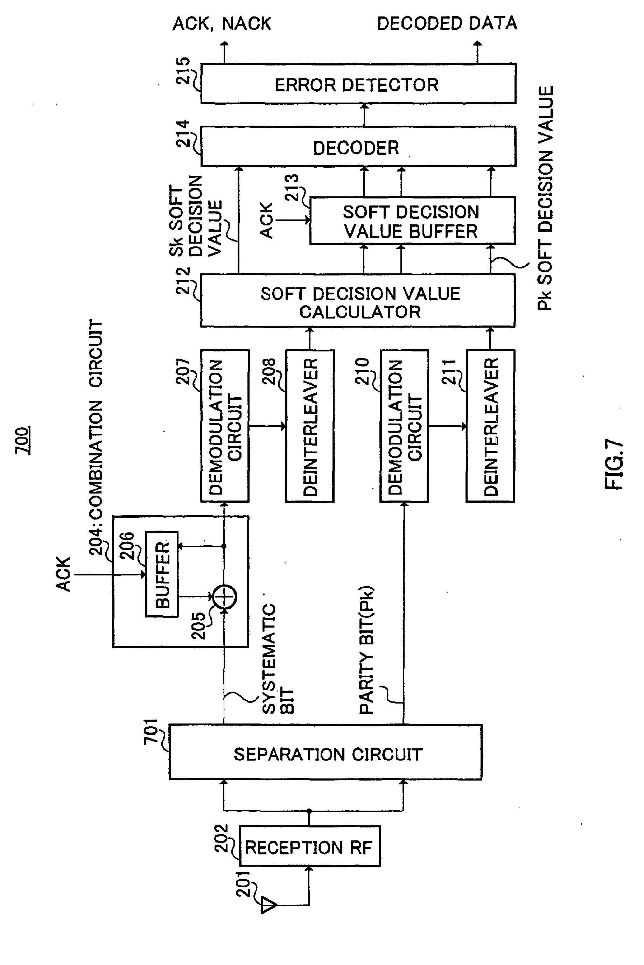

A data transmission apparatus according to this embodiment is constructed of transmission apparatus 600 instead of transmission apparatus 100 shown in FIG.1 and reception apparatus 700 instead of reception apparatus 200. FIG.6 is a block diagram showing an internal configuration of transmission apparatus 600 according to Embodiment 2 of the present invention and FIG.7 is a block diagram showing an internal configuration of reception apparatus 700 according to Embodiment 2 of the present invention. The same components of transmission apparatus 600 shown in FIG.6 as those of transmission apparatus 100 in FIG.2 are assigned the same reference numerals as those in FIG.2 and detailed explanations thereof will be omitted. Furthermore, the same components of reception apparatus 700 shown in FIG.7 as those of transmission apparatus 100 in FIG.3 are assigned the same reference numerals as those in FIG.3 and detailed explanations thereof will be omitted. This embodiment differs from Embodiment 1 in that systematic bits and parity bits are assigned to different symbols on a time-sharing basis.

In FIG.6, multiplexing circuit 601 provides bit segments for a packet and assigns systematic bits and parity bits to different bit segments, symbol-converts the assigned bit strings and thereby places the systematic bits and parity bits in different symbols. The number of bits assigned to each bit segment is decided according to the modulation system of modulation circuit 602. Modulation circuit 602 modulates bit strings containing the systematic bits and parity bits assigned by multiplexing circuit 601 using a predetermined modulation system such as QPSK and 16QAM.

Above transmission apparatus 600 provides interleaver 103 for interleaving systematic bits and interleaver 107 for interleaving parity bits separately and in this way prevents systematic bits and parity bits from being rearranged to be assigned to a same bit segment. Therefore, interleaving according to this embodiment is carried out before multiplexing circuit 601 (near encoder 101) and it is desirable that data should be rearranged before systematic bits and parity bits are multiplexed.

In FIG.7, separation circuit 701 separates a received packet into symbols provided with systematic bits and symbols provided with parity bits on a bit-segment basis. Separation circuit 701 outputs symbols provided with systematic bits to combination circuit 204 and outputs symbols provided with parity bits to demodulation circuit 210.

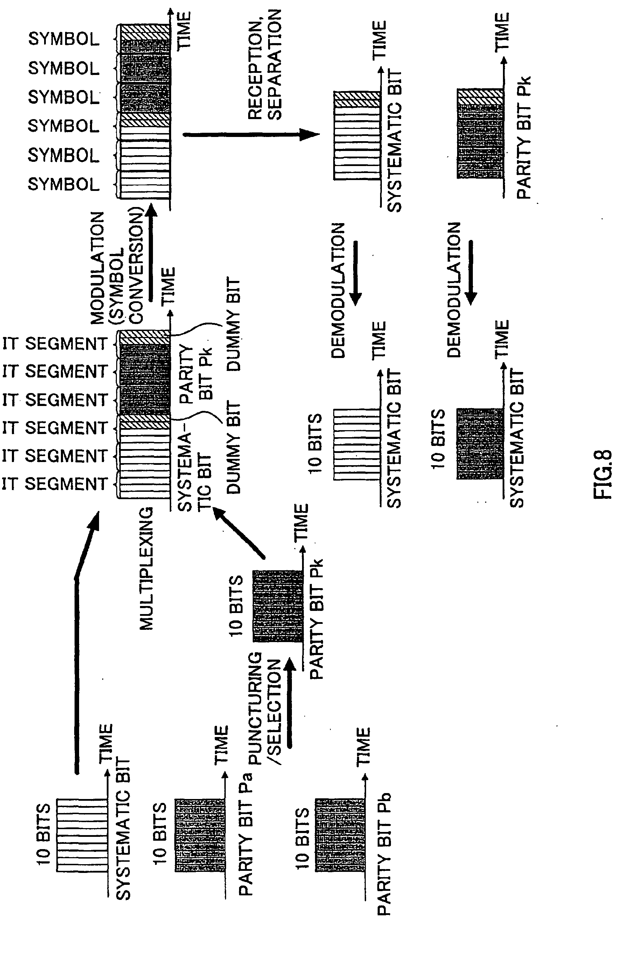

An operation of the data transmission apparatus in the above-described configuration will be explained with reference to FIG.8. FIG.8 is a schematic view showing an ARQ processing flow according to Embodiment 2 of the present invention. First, encoder 101 at transmission apparatus 600 encodes information bits to generate systematic bits and parity bits. Here, a case where the code rate of encoder 101 is 1/3 and information bits are transmitted in 10-bit units will be explained. The 10 information bits are encoded by encoder 101, and as a result 10 systematic bits, 10 parity bits Pa and 10 parity bits Pb are generated. Parity bits Pa and parity bits Pb are punctured by puncture circuit 102 and parity bits P1 to Pn each consisting of 10 bits are generated. These parity bits P1 to Pn are stored in buffer 110 and of parity bits P1 to Pn stored in this buffer 110, parity bits corresponding to a transmission count are read by selection circuit 111 and output to multiplexing circuit 601. Here, a caseof kthtransmission (kth retransmission unit) will be explained. Thus, parity bit Pk is input to multiplexing circuit 601.

When composing a packet, multiplexing circuit 601 provides each bit segment for every few bits for a packet. These bit segments are set according to the modulation system at modulation circuit 602 in the next stage. That is, multiplexing circuit 601 provides each bit segment according to the number of bits placed by modulation circuit 602 in one symbol (unit symbol) and places systematic bits and parity bits in this bit segment. To be specific, in the case where the modulation system used by modulation circuit 602 is 16PSK or 16QAM, 4 bits are placed in one symbol, and therefore bit segments are provided in 4-bit units (4-bit segment). Likewise, in the case where the modulation system used by modulation circuit 602 is BPSK, bit segments are provided in 1-bit units, in the case of QPSK, bit segments are provided in 2-bit units, and in the case of 64QAM, bit segments are provided in 8-bit units.

Now, a case where modulation circuit 602 uses 16QAM and multiplexing circuit 601 provides bit segments in 4-bit units will be explained. First, multiplexing circuit 601 reads 10 systematic bits from buffer 106. The first 8 bits of these 10 systematic bits are assigned to a first bit segment and second bit segment, 4 bits each, and the remaining 2 bits are assigned to a third bit segment. Dummy bits are inserted in a free area consisting of the remaining 2 bits of the third bit segment.

Then, 10 parity bits Pk are input to multiplexing circuit 601. The first 8 bits of these 10 parity bits Pk are assigned to a fourth bit segment and fifth bit segment, 4 bits each, and the remaining 2 bits are assigned to a sixth bit segment. Dummy bits are inserted in a free area consisting of the remaining 2 bits of the sixth bit segment. In this way, it is possible to provide bit segments for a packet and assign systematic bits and parity bits to different bit segments.

Then, the packet configured as shown above is symbol-converted at modulation circuit 602 using 16QAM. That is, the 4 systematic bits assigned to the first bit segment are placed in the first symbol and 4 systematic bits assigned to the second bit are placed in the second symbol, the 2 systematic bits and 2 dummy bits assigned to the third bit segment are placed in the third symbol. Furthermore, the 4 parity bits assigned to the fourth bit segment are placed in the fourth symbol, the 4 systematic bits assigned to the fifth bit segment are placed in the fifth symbol, the 2 parity bits and 2 dummy bits assigned to the sixth bit segment are placed in the sixth symbol.

Thus, providing bit segments for a packet, assigning systematic bits and parity bits to different bit segments and modulating them allows the systematic bits and parity bits to be placed in different symbols. That is, all symbols are constructed of only systematic bits or a combination of systematic bits and dummy bits or only parity bits or a combination of parity bits and dummy bits.

The modulated packet is sent to reception apparatus 700. The packet received by reception apparatus 700 is input to separation circuit 701. Separation circuit 701 separates the received packet into symbols provided with systematic bits and symbols provided with parity bits. That is, separation circuit 701 discriminates between symbols provided with systematic bits and symbols provided with parity bits based on placement information of systematic bits and parity bits sent beforehand from transmission apparatus 600 and separates symbols according to this discrimination result.

The symbols provided with systematic bits are subjected to demodulation processing at demodulation circuit 207 according to the modulation system of modulation circuit 602. On the other hand, symbols provided with parity bits are subjected to demodulation processing at demodulation circuit 210 according to the modulation system of modulation circuit 602. In this way, systematic bits and parity bits are separated.

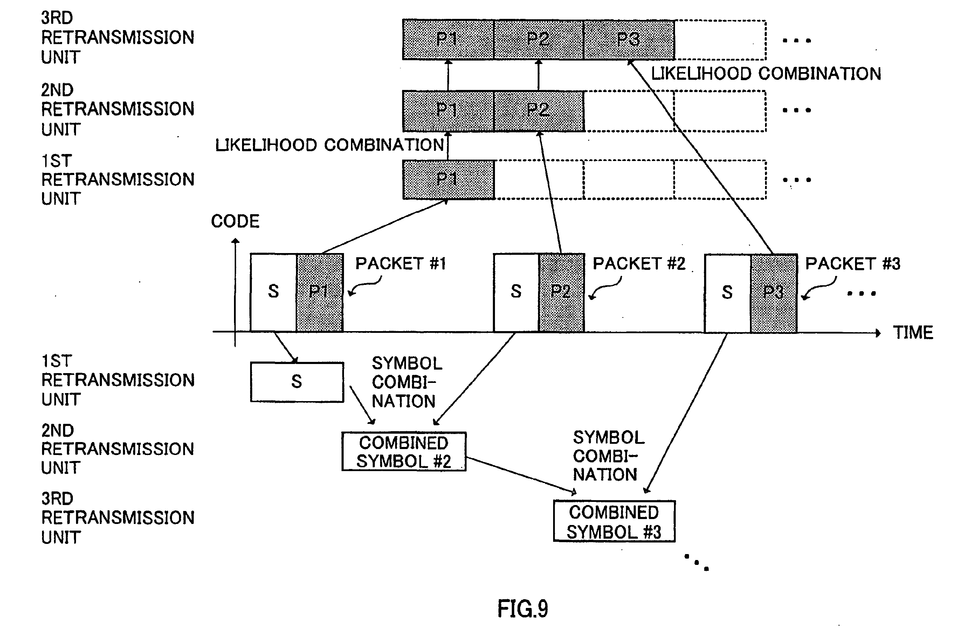

Here, the processing flow of a received packet at reception apparatus 700 according to the present invention will be explained. FIG.9 is a schematic view showing a processing flow of reception apparatus 700 according to Embodiment 2 of the present invention. Here, the flow up to the third retransmission unit is shown for ease of explanation. In FIG.9, symbol combination and likelihood combination in each retransmission unit are the same as those in Embodiment 1 shown in FIG.5, and therefore detailed explanations will be omitted. The processing shown in FIG.9 is different from the processing shown in FIG.5 in that systematic bits and parity bits are placed in different symbols on a time-dividing basis .

As shown in this figure, packet #1 received in the first retransmission unit is composed of a symbol provided with systematic bit S and another symbol provided with parity bit P1, packet #2 received in the second retransmission unit is composed of a symbol provided with systematic bit S and another symbol provided with parity bit P2, and packet #3 received in the third retransmission unit is composed of a symbol provided with systematic bit S and another symbol provided with parity bit P3. Since systematic bits S and parity bits P1 to P3 are assigned to mutually different bit segments and symbol-converted, reception apparatus 700 can extract symbols provided with systematic bits S and symbols provided with parity bits separately.

As shown in this figure, error correcting decoding is carried out in each retransmission unit using parity bits included in the packet received this time in addition to the parity bits already received in preceding retransmission units, and in this way the error correcting performance of decoder 214 improves. Furthermore, combining the symbol provided with systematic bit S in the retransmission unit this time with the combination result of symbols provided with systematic bits S already received in the preceding retransmission units will improve reception quality compared to the preceding retransmission units.

As explained above, according to this embodiment, transmission apparatus 600 provides bit segments in a packet, assigns systematic bits and parity bits to different bit segments and demodulates them, which causes the systematic bits and parity bits to be placed in mutually different symbols. Reception apparatus 700 that has received this packet can separate symbols provided with systematic bits from symbols provided with parity bits. Thus, it is possible to increase the ratio of parity bits to check bits used for error correcting decoding every time retransmission is repeated and at the same time improve reception quality by symbol-combining systematic bits. This makes it possible to reduce the number of times retransmission is carried out until all errors are eliminated and thereby improve throughput.

### (Embodiment 3)

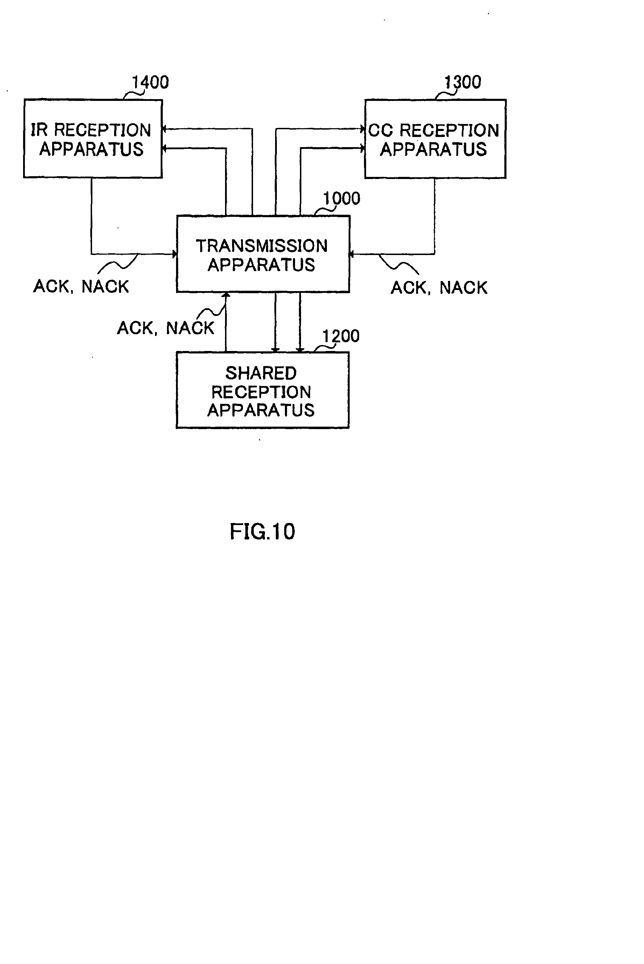

Embodiment 3 of the present invention will be explained with reference to FIG.10 to FIG.13. This embodiment differs from Embodiment 1 in that the transmission apparatus also communicates with a CC type ARQ reception apparatus and an IR type ARQ reception apparatus. Furthermore, this embodiment also differs from Embodiment 1 in that the transmission apparatus sends some identical parity bits among different retransmission units.

FIG.10 illustrates an outlined configuration of a data transmission apparatus according to Embodiment 3 of the present invention. As shown in FIG.10, transmission apparatus 1000 is connected to shared reception apparatus 1200, CC reception apparatus 1300 and IR reception apparatus 1400 by bi-directional transmission paths. Transmission apparatus 1000 sends data to shared reception apparatus 1200, CC reception apparatus 1300 and IR reception apparatus 1400 and sends predetermined data according to ACK/NACK. CC reception apparatus 1300 is a reception apparatus that carries out CC type ARQ for symbol-combining received packets, IR reception apparatus 1400 is a reception apparatus that receives different parity bits in every retransmission and performs error correcting decoding using these parity bits as check bits and shared reception apparatus 1200 is a reception apparatus that performs both CC type ARQ and IR type ARQ.

The configurations of above transmission apparatus 1000, shared reception apparatus 1200, CC reception apparatus 1300 and IR reception apparatus 1400 will be explained in detail below.

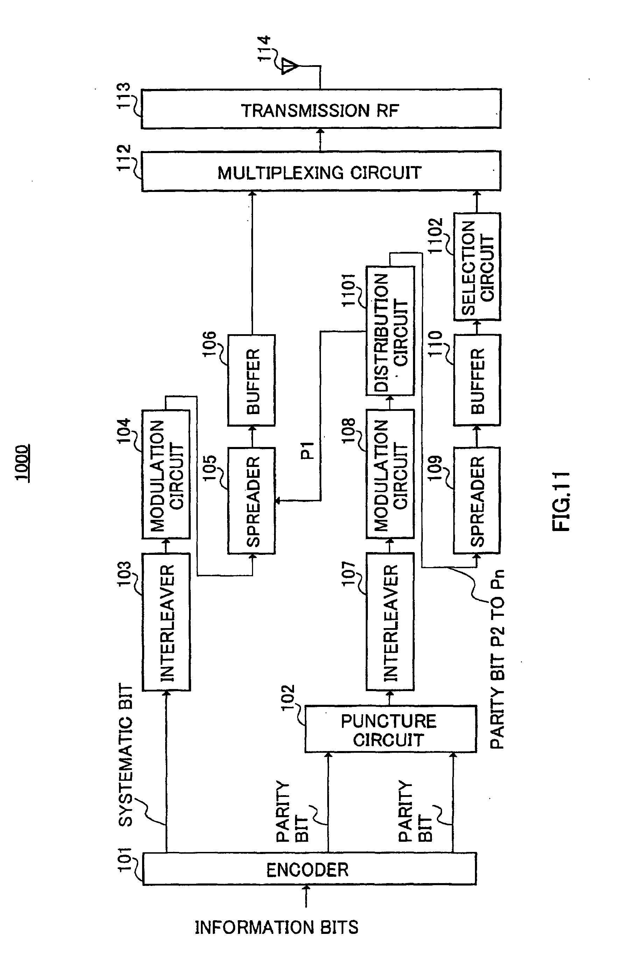

First, transmission apparatus 1000 will be explained. FIG. 11 is a block diagram showing an internal configuration of transmission apparatus 1000 according to Embodiment 3 of the present invention. The same components of transmission apparatus 1000 shown in FIG.11 as those of transmission apparatus 100 in FIG.2 are assigned the same reference numerals as those in FIG.2 and detailed explanations thereof will be omitted. In FIG.11, distribution circuit 1101 outputs some of parity bits P1 to Pn output frommodulation circuit 108 to spreader 105 as retransmission parity bits (1st parity bits) and outputs the remaining bits to spreader 109. For example, distribution circuit 1101 outputs P1 of P1 to Pn to spreader 105 as a retransmission parity bit and remaining P2 to Pn (2nd parity bits) to spreader 109. In this way, same retransmission parity bit P1 is sent among different retransmission units. On the other hand, different parity bits P2 to Pn (2nd parity bits) are sent among different retransmission units. For ease of explanation, this embodiment will describe a case where distribution circuit 1101 outputs parity bit P1 to spreader 105 and outputs parity bits P2 to Pn to spreader 109.

Spreader 105 applies spreading processing to systematic bits output from modulation circuit 104 and parity bit P1 output from distribution circuit 1101 using spreading code A. Spreader 109 applies spreading processing to parity bits P2 to Pn output from distribution circuit 1101 using spreading code B which is different from spreading code A. In the present Specification, a bit string composed of systematic bits and retransmission parity bit (here, parity bit P1) is called a "first bit string" and a parity bit which is sent only in a predetermined retransmission unit (here any one of parity bits P2 to Pn) is generally called a "second bit string". Spreader 105 applies spreading processing to the first bit string using spreading code A and spreader 109 applies spreading processing to the respective parity bits included the second bit string using spreading code B, and in this way the first bit string and second bit string are assigned to different spreading codes.

Selection circuit 1102 reads a parity bit corresponding to a transmission count from parity bits P2 to Pn stored in buffer 110 and outputs the parity bit to multiplexing circuit 112. That is, selection circuit 1102 decides a transmission count (what number of retransmission unit) with respect to the information bits of a predetermined block corresponding to the transmission to be carried out based on the information notified from a control station (not shown) and selects a parity bit corresponding to the transmission count. For example, in the case of a kth transmission (kth retransmission unit) with respect to the information bits of a predetermined block, selection circuit 1102 reads parity bit Pk+1 from buffer 110 and outputs it to multiplexing circuit 112.

Multiplexing circuit 112 reads the symbol provided with a systematic bit and parity bit P1 (1st bit string) from buffer 106, multiplexes the read symbol, the symbol provided with parity bit Pk+1 (2nd bit string) output from selection circuit 1102 and a protocol header to generate a transmission packet and outputs the transmission packet generated to transmission RF 113. Transmission RF 113 applies predetermined transmission processing such as frequency conversion, amplification, etc. to the transmission packet output from multiplexing circuit 112 and transmits the packet through antenna 114.

Hereafter, communications using ARQ carried out by transmission apparatus 1000 with shared reception apparatus 1200, CC reception apparatus 1300 and IR reception apparatus 1400 will be explained. First, a communication with shared reception apparatus 1200 will be explained.

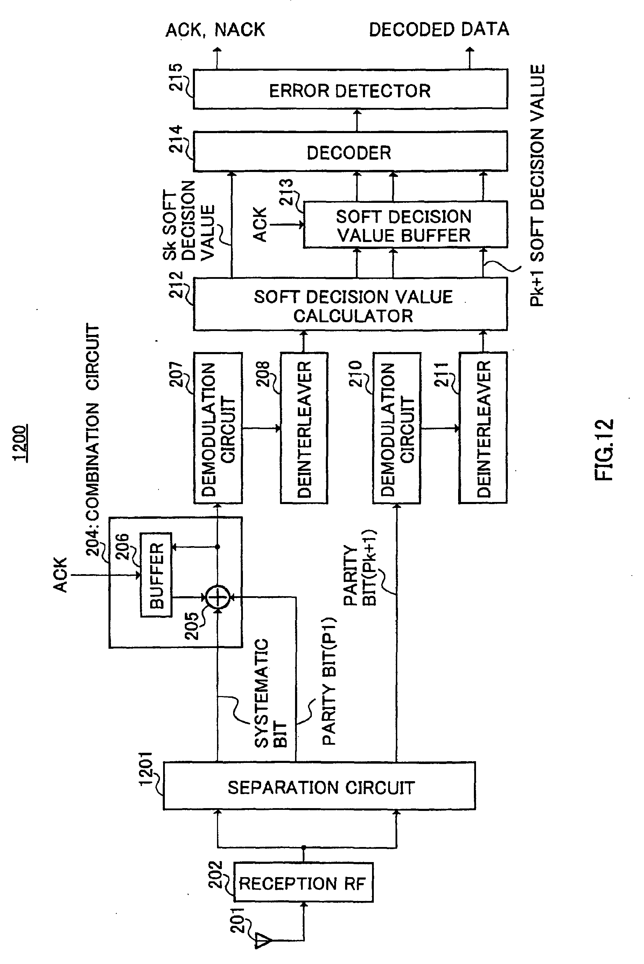

FIG.12 is a block diagram showing a configuration of shared reception apparatus 1200 according to Embodiment 3 of the present invention. Shared reception apparatus 1200 symbols-combines systematic bits included in the received packet among different retransmission units and applies likelihood combination to parity bits to perform decoding processing. That is, shared reception apparatus 1200 is applicable to both CC type ARQ and IR type ARQ systems . The same components in FIG.12 as those in FIG.3 are assigned the same reference numerals as those in FIG.3 and detailed explanations thereof will be omitted.

In FIG.12, reception RF 202 applies predetermined reception processing such as frequency conversion to a packet received from antenna 201 and outputs the packet subjected to reception processing to separation circuit 1201. Separation circuit 1201 separates a symbol provided with a systematic bit and parity bit P1 (1st bit string) and a symbol provided with parity bit Pk+1 (2nd bit string) from the received packet. The symbol provided with the 1st bit string after the separation is output to combination circuit 204 and the symbol provided with the 2nd bit string after the separation is output to demodulation circuit 210.

To be specific, separation circuit 1201 applies despreading processing to the received packet output from reception RF 202 using spreading code A and RAKE-combines the despread signals. In this way, the systematic bit and parity bit P1 (1st bit string) assigned to spreading code A are extracted from the received packet as symbols. Furthermore, separation circuit 1201 applies despreading processing to the received packet output from reception RF 202 using spreading code B and RAKE-combines the despread signals. In this way, parity bit Pk+1 (2nd bit string) assigned to spreading code B is extracted from the received packet as a symbol. Thus, applying despreading processing to the received packets using mutually different spreading codes, separation circuit 1201 separates the symbol provided with the 1st bit string from the symbol provided with the 2nd bit string.

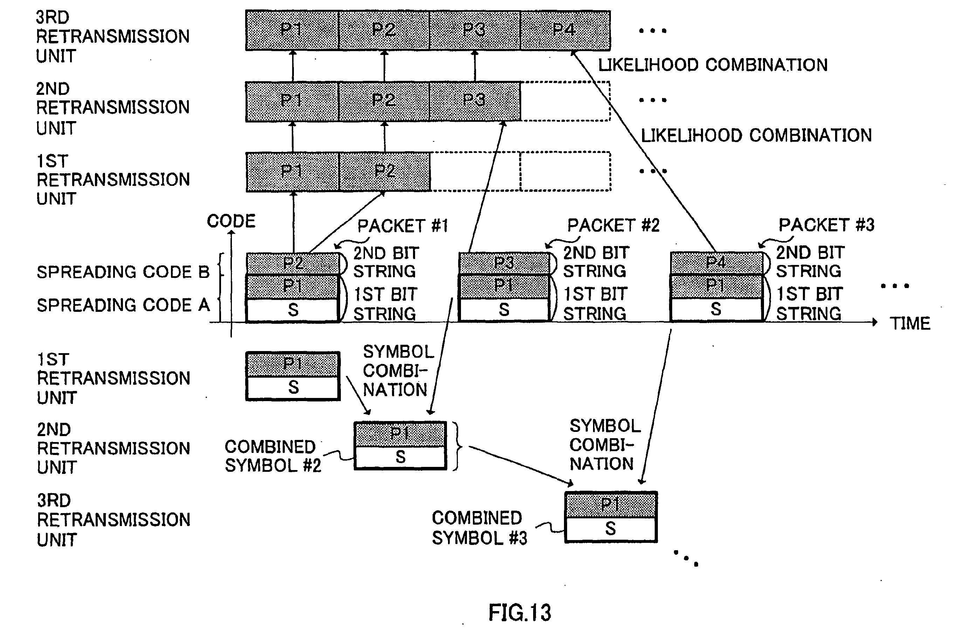

Here, the processing at shared reception apparatus 1200 according to this embodiment will be explained in detail. FIG.13 is a schematic view showing a processing flow of a reception apparatus (shared reception apparatus 1200, CC reception apparatus 1300 and IR reception apparatus 1400) according to Embodiment 3 of the present invention. For ease of explanation, the flow up to the third retransmission unit will be shown here.

As shown in this figure, packet #1 received in the 1st retransmission unit is composed of a systematic bit and parity bit P1 (1st bit string) and parity bit p2 (2nd bit string), packet #2 received in the 2nd retransmission unit is composed of a systematic bit and parity bit P1 (1st bit string) and parity bit P3 (2nd bit string) and packet #3 received in the 3rd retransmission unit is composed of a systematic bit and parity bit P1 (1st bit string) and parity bit P4. Since mutually different spreading codes are assigned to the 1st bit string and 2nd bit string, shared reception apparatus 1200 can extract the symbol provided with the 1st bit string and the symbol provided with the 2nd bit string separately from the received packet.

In the first retransmission unit, decoder 214 carries out error correcting decoding on systematic bit S using parity bit P1 and parity bit P2 as check bits.

In the second retransmission unit, the first bit string (systematic bit S and parity bit P1) is extracted from packet #2, symbol-combined with the 1st bit string extracted from packet #1 in the previous retransmission unit to generate combined symbol #2. Decoder 214 carries out error correcting decoding on the symbol-combined systematic bit using symbol-combined parity bit P1, parity bit P3 extracted from packet #2 and parity bit P2 extracted from packet #1 in the 1st retransmission unit as check bits. That is, decoder 214 applies likelihood combination to parity bit P1 and parity bit P2 extracted in the 1st retransmission unit and parity bit P3 extracted in the 2nd retransmission unit and carries out error correcting decoding on combined symbol #2 using the likelihood-combined parity bits.

Thus, error correcting decoding is carried out also using parity bit P3 included in packet #2 in addition to already received parity bit P1 and parity bit P2, and in this way the error correcting performance of decoder 214 improves. Furthermore, symbol combination makes higher the signal level than that of systematic bits without symbol combination, and therefore it possible to improve reception quality in the 2nd retransmission unit compared to that in the 1st retransmission unit.

In the 3rd retransmission unit, error correcting decoding is carried out also using parity bit P4 included in packet #3 in addition to already received parity bit P1, parity bit P2 and parity bit 3, and in this way the error correcting performance of decoder 214 improves. Furthermore, the symbol provided with the 1st bit string extracted from retransmission packet #3 is symbol-combined with combined symbol #2 to generate combined symbol #3. Since the signal level of combined symbol #3 is higher than combined symbol #2, it is possible to improve reception quality in the 3rd retransmission unit compared to reception quality in the 2nd retransmission unit.

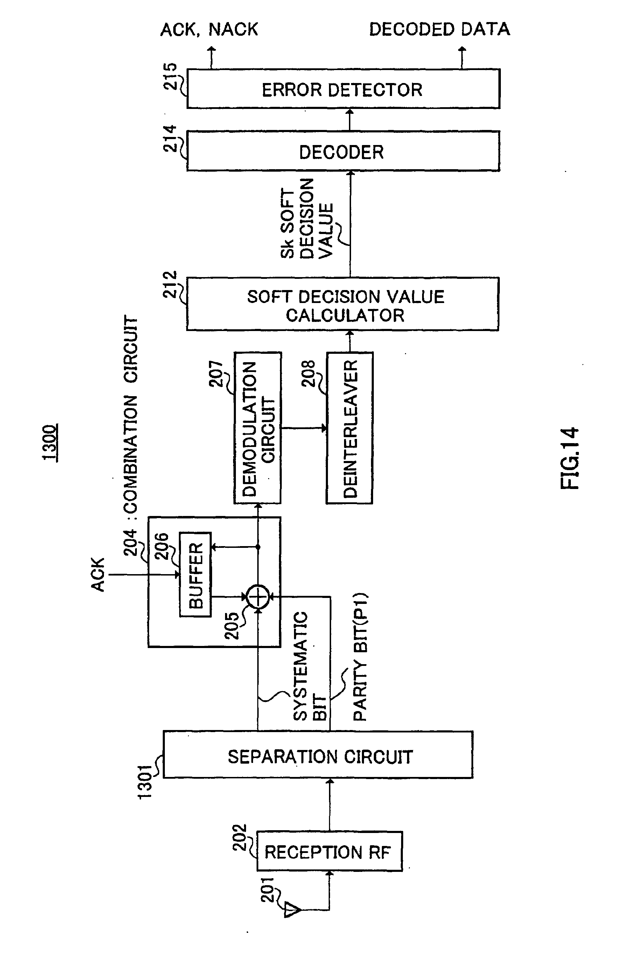

Then, a communication with CC reception apparatus 1300 will be explained. FIG.14 is a block diagram showing an internal configuration of CC reception apparatus 1300 according to Embodiment 3 of the present invention. The same components in FIG.14 as those in FIG.3 according to Embodiment 1 are assigned the same reference numerals as those in FIG.3 and detailed explanations thereof will be omitted.

In this FIG.14, reception RF 202 applies predetermined reception processing such as frequency conversion to a packet received from antenna 201 and outputs the packet after the reception processing to separation circuit 1301. Separation circuit 1301 separates a symbol provided with a systematic bit and parity bit P1 (1st bit string) and a symbol provided with parity bit Pk+1 (2nd bit string) from the received packet. That is, separation circuit 1301 applies despreading processing to the received packet output from reception RF 202 using spreading code A and RAKE-combines the despread signals. In this way, the systematic bit and parity bit P1 (1st bit string) assigned to spreading code A are extracted from the received packet as a symbol. The symbol provided with the 1st bit string after the separation is output to combination circuit 204.

Here, the processing at CC reception apparatus according to this embodiment will be explained using FIG.13 again. In the 1st retransmission unit, decoder 214 carries out error correcting decoding on systematic bit S extracted from packet #1 using parity bit P1 and parity bit P2 as check bits.

In the 2nd retransmission unit, the 1st bit string (systematic bit S and parity bit P1) is extracted from packet #2, then symbol-combined with the 1st bit string extracted from packet #1 in the previous retransmission unit to generate combined symbol #2. Decoder 214 carries out error correcting decoding on the symbol-combined systematic bit using symbol-combined parity bit P1 as a check bit.

In the 3rd retransmission unit likewise, the symbol provided with the 1st bit string extracted from retransmission packet #3 is symbol-combinedwith combined symbol #2 to generate combined symbol #3. Since the signal level of combined symbol #3 is higher than combined symbol #2, it is possible to improve reception quality in the 3rd retransmission unit compared to reception quality in the 2nd retransmission unit.

Thus, every time a packet is received, the CC reception apparatus symbol-combines the symbol provided with the 1st bit string included in the received packet with the symbol provided with the already received 1st bit string, which makes it possible to realize high reception quality. On the other hand, this embodiment does not have a configuration of extracting and combining different parity bits (2nd bit string) every time retransmission is carried out, and therefore this CC reception apparatus has advantageous effects of eliminating the need to provide a buffer used for likelihood combination of parity bits, making it possible to reduce the size of the apparatus and reduce power consumption.

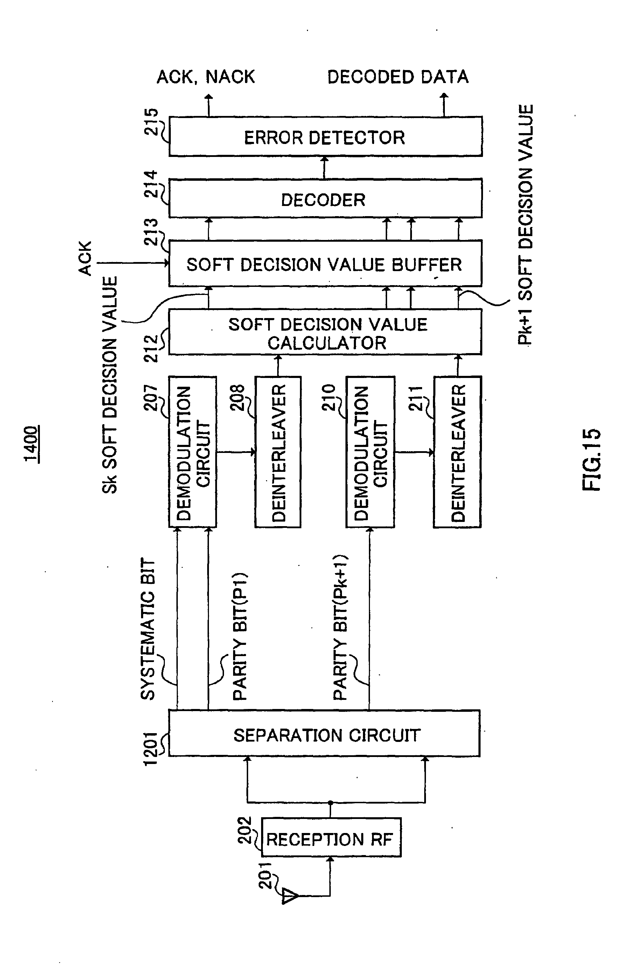

Then, a communication with IR reception apparatus 1400 will be explained. FIG.15 is a block diagram showing an internal configuration of IR reception apparatus 1400 according to Embodiment 3 of the present invention. As shown in FIG.15, IR reception apparatus 1400 differs from shared reception apparatus 1200 shown in FIG.12 in that IR reception apparatus 1400 does not perform symbol combination among retransmission units on symbols provided with the first bit string. The same components in FIG.15 as those in FIG.12 are assigned the same reference numerals and detailed explanations thereof will be omitted.

In FIG.15, reception RF 202 applies predetermined reception processing such as frequency conversion to a packet received from antenna 201 and outputs the packet after the reception processing to separation circuit 1201. Separation circuit 1201 separates a symbol provided with a systematic bit and parity bit P1 (1st bit string) and a symbol provided with parity bit Pk+1 (2nd bit string) from the received packet. That is, a despreader (not shown) provided for separation circuit 1201 applies despreading processing to a received packet output from reception RF 202 using spreading code A and spreading code B and RAKE-combines the despread signals. In this way, the systematic bit and parity bit P1 (1st bit string) assigned to spreading code A and parity bit Pk+1 (2nd bit string) assigned to spreading code B are extracted from the received packet as symbols . The symbol provided with the 1st bit string after the separation is output to demodulation circuit 207.

Here, the processing at IR reception apparatus 1400 according to this embodiment will be further explained using FIG.13. In the 1st retransmission unit, decoder 214 carries out error correcting decoding on systematic bit S extracted from packet #1 using parity bit P1 and parity bit P2 as check bits.

In the 2nd retransmission unit, decoder 214 carries out error correcting decoding on systematic bit S using parity bit P1 and parity bit P2 extracted from packet #1 in the 1st retransmission unit and parity bit P3 extracted from packet #2 as check bits. That is, decoder 214 applies likelihood combination to parity bit P1 and parity bit P2 extracted in the 1st retransmission unit and parity bit P3 extracted in the 2nd retransmission unit and carries out error correcting decoding on systematic bit S using the likelihood-combined parity bit.

In the 3rd retransmission unit likewise, error correcting decoding is performed using also parity bit P4 included in packet #3 in addition to already received parity bit P1, parity bit P2 and parity bit P3, which improves the error correcting performance of decoder 214.

Thus, the IR reception apparatus applies likelihood combination to a parity bit newly received for every retransmission with the previously received parity bits and then performs error correcting decoding, which improves the error correcting performance for every retransmission. On the other hand, without performing symbol combination on a symbol provided with a systematic bit, the IR reception apparatus can reduce the size of the apparatus and power consumption compared to shared reception apparatus 1200.

As explained above, according to this embodiment, a packet is constructed in such a way that some parity bits are shared among different retransmission units, and therefore CC reception apparatus 1300 can perform ARQ processing using a systematic bit and a common parity bit (parity bit P1 in this embodiment) among different retransmission units of the received packet.

Furthermore, as in the case of reception apparatus 200 shown in Embodiment 1, shared reception apparatus 1200 can perform error correcting decoding on the symbol-combined systematic bit using the likelihood-combined parity bit as a check bit. Furthermore, IR reception apparatus 1400 can perform error correcting decoding by likelihood-combining different parity bits among different retransmission units.

Transmission apparatus 1000 according to this embodiment constructs a packet in such a way that some parity bits are identical among retransmission units as shown in FIG.13, and can thereby communicate with any one of above-described shared reception apparatus 1200, CC reception apparatus 1300 and IR reception apparatus 1400.

That is, the reception apparatuses (shared reception apparatus 1200, CC reception apparatus 1300 or IR reception apparatus 1400) that communicate with transmission apparatus 1000 have their respective specific features as described above. Thus, the user may use reception apparatuses according to their respective purposes. In this case, transmission apparatus 1000 according to this embodiment can communicates with any one of shared reception apparatus 1200, CC reception apparatus 1300 and IR reception apparatus 1400, and can thereby eliminate the need to install different transmission apparatuses for different reception apparatuses and realize a drastic cost reduction.

### (Embodiment 4)

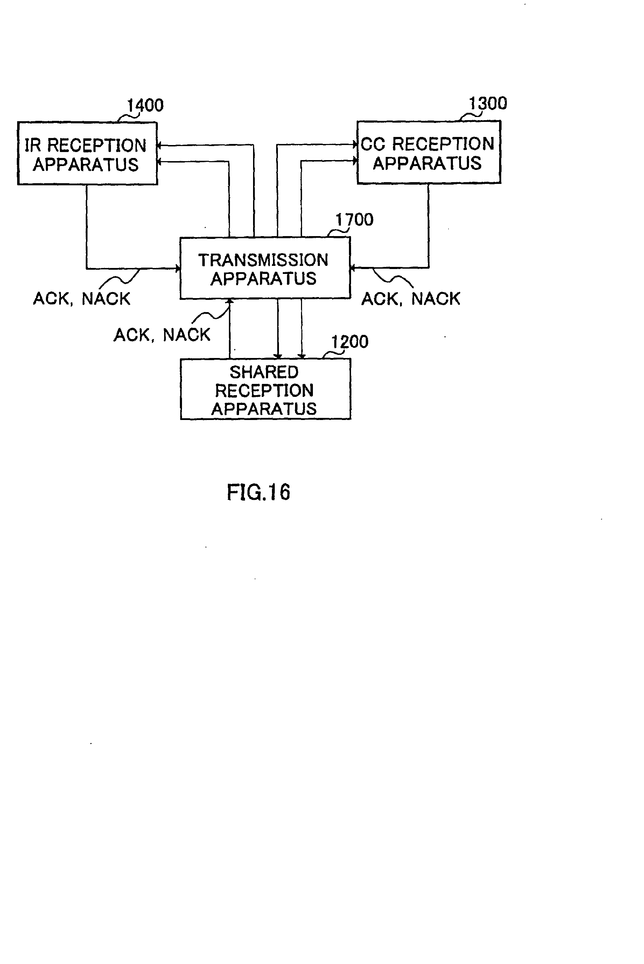

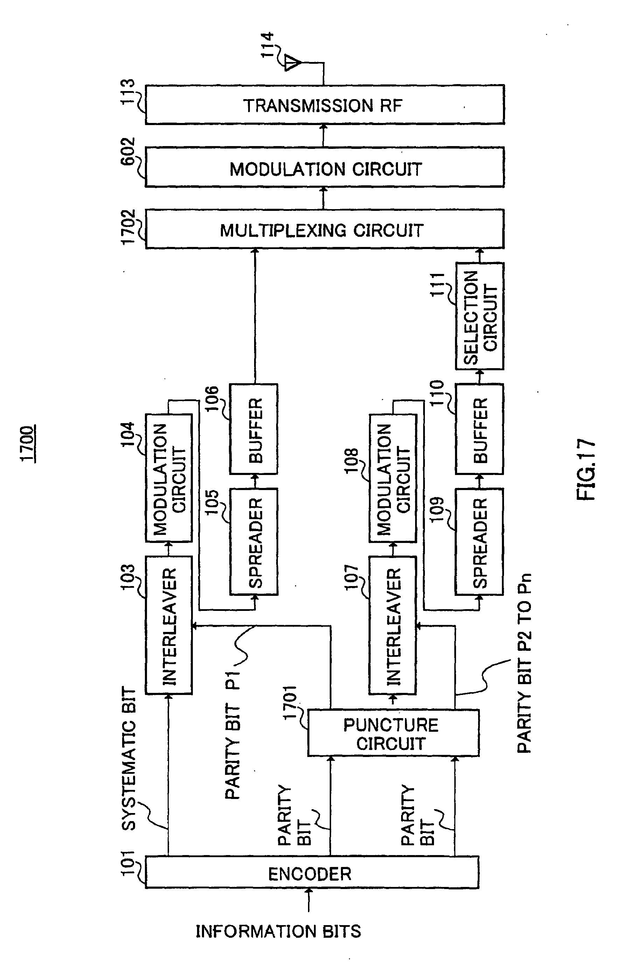

As shown in FIG.16, a data transmission apparatus according to this embodiment adopts a configuration including transmission apparatus 1700 instead of transmission apparatus 1000 shown in FIG.10. FIG.17 shows an internal configuration of this transmission apparatus 1700. Transmission apparatus 1700 differs from Embodiment 3 in that the 1st bit string and 2nd bit string are assigned to different bit segments. The same components in FIG.16 as those in FIG.10 are assigned the same reference numerals and detailed explanations thereof will be omitted. The same components in FIG.17 as those of transmission apparatus 100 shown in FIG.6 are assigned the same reference numerals and detailed explanations thereof will be omitted.

As shown in FIG.17, puncture circuit 1701 outputs parity bit P1 of parity bits P1 to Pn generated for puncturing processing to inter leaver 103 as a retransmission parity bit and outputs remaining parity bits P2 to Pn to interleaver 107. Multiplexing circuit 1702 provides bit segments for a packet, assigns a first bit string composed of a systematic bit and retransmission parity bit P1 and a second bit string composed of a parity bit output from selection circuit 111 to mutually different bit segments, symbol-converts the assigned bit strings, and thereby places the first bit string and second bit string in different symbols. Transmission apparatus 1700 sends the packet configured in this way to shared reception apparatus 1200, CC reception apparatus 1300 and IR reception apparatus 1400.

Separation circuit 1201 of shared reception apparatus 1200 separates the symbol provided with the systematic bit and parity bit P1 (1st bit string) and the symbol provided with parity bit Pk+1 (2nd bit string) from the received packet. The separated symbol provided with the 1st bit string is output to combination circuit 204 and the separated symbol provided with the 2nd bit string are output to symbol demodulation circuit 210.

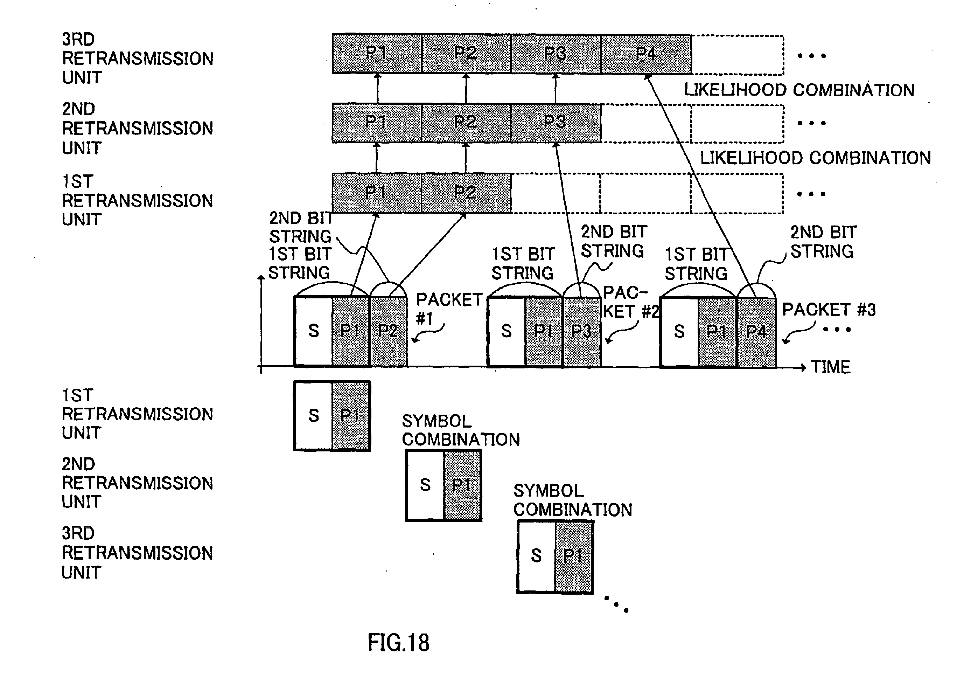

Here, the processing at 'shared reception apparatus 1200 according to this embodiment will be explained in detail. FIG.18 is a schematic view showing a processing flow of the received packet. For ease of explanation, the flow up to the 3rd retransmission unit is shown here.

First, in the 1st retransmission unit, decoder 214 performs error correcting decoding on systematic bit S using parity bit P1 and parity bit P2 as check bits. In the 2nd retransmission unit, decoder 214 performs error correcting decoding on a systematic bit after a symbol combination using parity bit P1 and parity bit P2 extracted from packet #1 and parity bit P3 extracted from packet #2 in the 2nd retransmission unit as check bits. In the 3rd retransmission unit, error correcting decoding is performed likewise using also parity bit 4 included in packet #3 in addition to already received parity bit P1, parity bit P2 and parity bit P3, which improves the error correcting performance of decoder 214.

Then, a communication with CC reception apparatus 1300 will be explained with reference to FIG14. In this FIG.14, separation circuit 1301 separates the symbol provided with the systematic bit and parity bit P1 (1st bit string) and the symbol provided with parity bit Pk+1 (2nd bit string) from the received packet.

CC reception apparatus 1300 according to this embodiment separates the 1st bit string and the 2nd bit string, and therefore every time a packet is received, CC reception apparatus 1300 symbol-combines the symbol provided with the 1st bit string included in the received packet and the symbol provided with the already received 1st bit string.

Then, a communication with IR reception apparatus 1400 will be explained. In FIG.15, reception RF 202 applies predetermined reception processing such as frequency conversion to a packet received from antenna 201 and outputs the packet after the reception processing to separation circuit 1201. Separation circuit 1201 separates a symbol provided with a systematic bit and parity bit P1 (1st bit string) and a symbol provided with parity bit Pk+1 (2nd bit string) from the received packet.

IR reception apparatus 1400 according to this embodiment separates the 1st bit string and 2nd bit string, and therefore every time retransmission is carried out, IR reception apparatus 1400 applies likelihood combination to the newly received parity bit with the previously received parity bits to carry out error correcting decoding.

As explained above, this embodiment constructs a packet in such a way that some common parity bits are used among different retransmission units, and therefore CC reception apparatus 1300 can perform ARQ processing using systematic bits and common parity bits (parity bit P1 in this embodiment) among different retransmission units of the received packet.

Transmission apparatus 1700 according to this embodiment can communicate with any of shared reception apparatus 1200, CC reception apparatus 1300 and IR reception apparatus 1400, and therefore there is no need to install different transmission apparatuses specific to their respective reception apparatuses, which contributes to a drastic cost reduction.

The data transmission apparatus of each of the foregoing embodiments is applied to a digital radio cellular system. A mobile station freely moving in a cell is provided with reception apparatus 200, shared reception apparatus 1200, CC reception apparatus 1300 or IR reception apparatus 1400. Furthermore, a base station is provided with transmission apparatus 100, transmission apparatus 1000 or transmission apparatus 1700. The present invention seeks to improve transmission quality in a radio communication and improve throughput by carrying out ARQ processing between this transmission apparatus 100 (transmission apparatus 1000 or transmission apparatus 1700) and corresponding reception apparatus 200 (shared reception apparatus 1200, CC reception apparatus 1300 or IR reception apparatus 1400).

As described above, according to the present invention, the transmission apparatus places a systematic bit and parity bit in different symbols, while the reception apparatus separates the systematic bit and parity bit. This makes it possible to apply symbol combination to systematic bits among different retransmission units and likelihood combination to parity bits among different retransmission units. Thus, the present invention can improve both reception quality and error correcting performance and thereby reduce the number of times retransmission is carried out until signals are received correctly and reduce propagation delays.

Furthermore, by assigning a first bit string composed of systematic bits and parity bits for retransmission and a second bit string composed of parity bits to different symbols, the transmission apparatus can communicate with any one of a reception apparatus carrying out CC type ARQ, a reception apparatus carrying out IR type ARQ or a reception apparatus carrying out both CC type ARQ and IR type ARQ. This eliminates the need to install different transmission apparatuses specific to their respective reception apparatuses and allows a drastic cost reduction.

Furthermore, the present invention saves systematic bits as symbols in a buffer, which allows the reception apparatus to reduce the size of the buffer necessary for systematic bits.

Moreover, calculating soft decision values of systematic bits after symbol combination makes it possible to realize higher reception performance than combining systematic bits after calculating their soft decision values.

### Industrial Applicability

The present invention is ideally applicable to a communication system, transmission apparatus and reception apparatus that carry out error control in data transmission by issuing automatic repeat requests.

This application is based on the Japanese Patent Application No.2000-398398 filed on December 27, 2000, entire content of which is expressly incorporated by reference herein.

## Claims

1. A transmission apparatus comprising:
an encoding section that encodes information bits using organizing codes to generate systematic bits and parity bits;
a generation section that places a systematic bit identical to a systematic bit in a preceding retransmission unit and a parity bit different from a parity bit in the preceding retransmission unit in mutually different symbols to generate a packet; and
a transmission section that transmits said packet.

2. The transmission apparatus according to claim 1, wherein the generation section assigns systematic bits and parity bits to mutually different spreading codes.

3. The transmission apparatus according to claim 1, wherein the generation section provides bit segments with a predetermined number of bits in a packet and assigns systematic bits and parity bits to mutually different bit segments.

4. The transmission apparatus according to claim 3, wherein the generation section makes the number of bits included in bit segment and the number of bits placed in a unit symbol the same.

5. A transmission apparatus comprising:
an encoding section that encodes information bits using organizing codes to generate systematic bits and parity bits;
a generation section that places a 1st bit string composed of a systematic bit identical to a systematic bit in a preceding retransmission unit and a 1st parity bit identical to a 1st parity bit in the preceding retransmission unit and a 2nd bit string composed of a 2nd parity bit different from a 2nd parity bit in the preceding retransmission unit in mutually different symbols to generate a packet; and
a transmission section that transmits said packet.

6. A reception apparatus comprising:
a reception section that receives a packet with a common systematic bit among different retransmission units and different parity bits among different retransmission units placed in mutually different symbols from the other end of communication;
a separation section that separates the symbol provided with the systematic bit and the symbols provided with the parity bits from the packet received by said reception section;
a combination section that symbol-combines the systematic bit in this retransmission unit separated by said separation section with systematic bits acquired in preceding retransmission units; and
an error correcting decoding section that likelihood-combines the parity bits separated by said separation section with the parity bits acquired in preceding retransmission units and performs error correcting decoding on the symbol-combined systematic bit using the likelihood-combined parity bit as a check bit.

7. The reception apparatus according to claim 6, wherein the reception section receives a packet with systematic bits and parity bits assigned to mutually different spreading codes from the other end of communication and the separation section separates the symbol provided with the systematic bits and the symbol provided with the parity bits by applying despreading processing to the received packet.

8. The reception apparatus according to claim 6, wherein the reception section receives a packet with systematic bits and parity bits assigned to mutually different bit segments from the other end of communication and the separation section separates the received packet into said bit segments.

9. A reception apparatus comprising:
a reception section that receives a packet with a 1st bit string composed of a common systematic bit among different retransmission units and a 1st parity bit and a 2nd bit string composed of different 2nd parity bits among different retransmission units placed in mutually different symbols from the other end of communication;
a separation section that separates the symbol provided with said 1st bit string and the symbol provided with said 2nd bit string from the packet received by said reception section;
a combination section that symbol-combines the symbol provided with the 1st bit string in this retransmission unit separated by said separation section with the symbol provided with the 1st bit strings acquired in preceding retransmission units; and
an error correcting decoding section that likelihood-combines the 2nd parity bit separated by said separation section with the 2nd parity bits acquired in preceding retransmission units and performs error correcting decoding on the systematic bit included in the symbol-combined 1st bit string using the likelihood-combined 2nd parity bit and the 1st parity bit included in the symbol-combined 1st bit string as check bits.

10. A communication system comprising:
a transmission apparatus that sends a packet with a 1st bit string composed of a common systematic bit among different retransmission units and a first parity bit and a 2nd bit string composed of different 2nd parity bits among different retransmission units placed in mutually different symbols;
a shared reception apparatus that receives said packet and performs error correcting decoding on said systematic bit symbol-combined among different retransmission units using said 1st parity bit and said 2nd parity bit subjected to likelihood combination among different retransmission units as check bits; and
a CC reception apparatus that receives said packet and performs error correcting decoding on said systematic bit symbol-combined among different retransmission units using said 1st parity bit as a check bit.

11. A transmission method comprising:
an encoding step of encoding information bits using organizing codes to generate systematic bits and parity bits;
a generating step of placing a systematic bit identical to a systematic bit in a preceding retransmission unit and a parity bit different from a parity bit in the preceding retransmission unit in mutually different symbols to generate a packet; and
a transmitting step of transmitting said packet.

12. A reception method comprising:
a receiving step of receiving a packet with a common systematic bit among different retransmission units and different parity bits among different retransmission units placed in different symbols from the other end of communication;
a separating step of separating the symbol provided with the systematic bit and the symbols provided with the parity bits from the packet received in said receiving step;
a combining step of symbol-combining the systematic bit in this retransmission unit separated in said separating step with systematic bits acquired in preceding retransmission units; and
an error correcting decoding step of likelihood-combining the parity bit separated in said separating step with the parity bits acquired in preceding retransmission units and performing error correcting decoding on the symbol-combined systematic bit using the likelihood-combined parity bit as a check bit.

13. A communication method comprising:
a transmitting step of transmitting a packet with a 1st bit string composed of a common systematic bit among different retransmission units and a 1st parity bit and a 2nd bit string composed of different 2nd parity bits among different retransmission units placed in mutually different symbols;
an error correcting decoding step of receiving said packet and carrying out error correcting decoding on said systematic bit resulting from symbol-combination among different retransmission units using said 1st parity bit and said 2nd parity bit resulting from likelihood-combination carried out among different retransmission units as check bits; and
an error correcting decoding step of receiving said packet and carrying out error correcting decoding on said systematic bit resulting from symbol-combination carried out among different retransmission units using said 1st parity bit as a check bit.
